# EUROPEAN PATENT APPLICATION

(11) **EP 4 813 712 A1**
(43) Date of publication of application: **30.09.2026**
(21) Application number: 24893043.0
(22) Date of filing: 27.09.2024
(51) Int. Cl.: B60K 25/00, B60G 13/08

(54) **HYDRAULIC POWER SUPPLY APPARATUS, CHASSIS SYSTEM, AND VEHICLE**

(30) Priority: 23.11.2023 CN 202323181213 U
(71) Applicant: BYD Company Limited, Shenzhen, Guangdong 518118 (CN)
(72) Inventor: YU, Fengchuan, Shenzhen, Guangdong 518118 (CN); JIA, Xinglong, Shenzhen, Guangdong 518118 (CN); ZHANG, Jiajie, Shenzhen, Guangdong 518118 (CN); LI, Tianming, Shenzhen, Guangdong 518118 (CN); OU, Xiaoyan, Shenzhen, Guangdong 518118 (CN)
(74) Representative: Mathys & Squire
(86) International application number: PCT/CN2024/121844
(87) International publication number: WO 2025/107884

(57) **Abstract**

A hydraulic power supply apparatus (600), a chassis system, and a vehicle are provided. The hydraulic power supply apparatus (600) includes a motor pump (100, 200), a motor controller (300), and a radiator (122, 222). The motor pump (100, 200) includes a hydraulic pump (110, 210) and a motor (120, 220) configured to drive the hydraulic pump (110, 210). The motor controller (300) is disposed on an outer side of the motor (120, 220). The radiator (122, 222) is located between the motor (120, 220) and the motor controller (300). In the present application, the radiator (122, 222) is disposed between the motor (120, 220) and the motor controller (300) to conduct heat of the motor (120, 220) and the motor controller (300), thereby helping dissipate heat from the motor controller (300), and improving running efficiency of the motor controller (300).

## Description

The present disclosure claims priority to Chinese Patent Application No. CN 202323181213.2, filed on November 23, 2023 and entitled "HYDRAULIC POWER SUPPLY APPARATUS, CHASSIS SYSTEM, AND VEHICLE", which is incorporated herein by reference in its entirety.

### TECHNICAL FIELD

The present disclosure generally relates to the technical field of vehicles, and more specifically, to a hydraulic power supply apparatus, a chassis system, and a vehicle.

### BACKGROUND

A motor-pump group in related technologies includes a motor, a motor controller, and a hydraulic pump. The hydraulic pump is connected to a hydraulic shock absorber. Power of the motor-pump group determines lifting capacity of the hydraulic shock absorber. The conventional technologies lack a motor-pump group with relatively high power.

### SUMMARY

A series of concepts in a simplified form are introduced in the summary, and a to be further described in detail in the description of embodiments. The summary neither implies an attempt to define key features and essential technical features of the claimed technical solutions, nor implies an attempt to determine the protection scope of the claimed technical solutions.

To at least partially resolve the foregoing problem, a first aspect of the present disclosure provides a hydraulic power supply apparatus. The hydraulic power supply apparatus includes a motor pump, a motor controller, and a radiator. The motor pump includes a hydraulic pump and a motor configured to drive the hydraulic pump. The motor controller is disposed on an outer side of the motor. The radiator is located between the motor and the motor controller.

According to the hydraulic power supply apparatus in the first aspect of the present disclosure, the radiator is disposed between the motor and the motor controller to conduct heat of the motor and the motor controller, thereby helping dissipate heat from the motor controller, and improving running efficiency of the motor controller.

Optionally, the motor includes a motor housing. The radiator is formed in the motor housing. A flow channel is formed inside the radiator.

Optionally, the motor housing includes a housing body, a flow channel plate, and a flow guide rib. A mounting groove is provided on a part of the housing body that faces the motor controller. The flow channel plate is connected to the mounting groove to close an opening of the mounting groove to form a heat dissipation cavity. The flow channel plate supports the motor controller. The flow guide rib is connected to the heat dissipation cavity to define the heat dissipation cavity as the flow channel.

Optionally, the flow channel plate includes an auxiliary heat dissipation element extending to the flow channel.

Optionally, the auxiliary heat dissipation element is configured as a heat dissipation pin. The flow channel plate includes a plurality of heat dissipation pins. The heat dissipation pins are spaced apart along an arrangement path adapted to the flow channel.

Optionally, the radiator is a heat pipe.

Optionally, the motor includes a motor housing. The heat pipe is disposed in the motor housing.

Optionally, two motor pumps include two motors. The two motors are respectively denoted as a first motor and a second motor. The hydraulic power supply apparatus includes two radiators. The two radiators are respectively a first radiator and a second radiator. The first radiator is located between the motor controller and the first motor. The second radiator is located between the motor controller and the second motor.

Optionally, the motor includes a motor housing and a motor body. Motor housings of the two motors are connected. The two motor housings are respectively a first motor housing and a second motor housing. An accommodating groove is provided between the two motor bodies, and the accommodating groove is formed in the first motor housing and the second motor housing. An opening of the accommodating groove faces the motor controller. The accommodating groove is configured to accommodate at least a capacitor of the motor controller.

Optionally, the first radiator is formed in the first motor housing. A first flow channel is formed inside the first radiator. The second radiator is formed in the second motor housing. A second flow channel is formed inside the second radiator. The first flow channel and the second flow channel are respectively located on two sides of the accommodating groove, and the first flow channel and the second flow channel are in communication.

Optionally, a flow-through groove is provided on a sidewall on the same side of the first motor housing and the second motor housing. The flow-through groove separately communicates with the first flow channel and the second flow channel.

Optionally, the motors of the two motor pumps are respectively denoted as the first motor and the second motor. The hydraulic power supply apparatus further includes a first electrical connection member and a second electrical connection member. The first electrical connection member is electrically connected to the first motor and the motor controller. The second electrical connection member is electrically connected to the second motor and the motor controller. An accommodating groove is formed between the first motor and the second motor. The first electrical connection member and the second electrical connection member are located in the accommodating groove.

Optionally, the motor controller includes a capacitor. The capacitor is disposed in the accommodating groove, and is located between the first electrical connection member and the second electrical connection member.

Optionally, the motor controller includes an electrical control housing and a breather valve. The breather valve is connected to the electrical control housing, and the breather valve communicates with the inside and the outside of the electrical control housing.

A second aspect of the present disclosure provides a chassis system. The chassis system includes a shock absorber and the foregoing hydraulic power supply apparatus. The hydraulic power supply apparatus communicates with the shock absorber.

According to the chassis system provided in the second aspect of the present disclosure, the foregoing hydraulic power supply apparatus is applied to improve a vibration damping effect of the chassis system.

A third aspect of the present disclosure provides a vehicle. The vehicle includes the foregoing hydraulic power supply apparatus or the foregoing chassis system.

According to the vehicle provided in the third aspect of the present disclosure, the foregoing hydraulic power supply apparatus or the foregoing chassis system is applied to help improve stability of the vehicle during driving and comfort of a driver and a passenger.

Optionally, the hydraulic power supply apparatus includes a first motor pump and a second motor pump. The first motor pump includes a first flow channel. The second motor pump includes a second flow channel. The vehicle further includes an air conditioner. The air conditioner communicates with the first flow channel and/or the second flow channel.

### BRIEF DESCRIPTION OF DRAWINGS

The following accompanying drawings of the implementations of the present disclosure are used herein as a part of the present disclosure to understand the present disclosure. The accompanying drawings show the implementations and descriptions of the present disclosure, and are used to explain the principle of the present disclosure. In the accompanying drawings:
FIG. 1 is a perspective view of a hydraulic power supply apparatus according to a preferred implementation of the present disclosure;
FIG. 2 is an exploded perspective view of a first motor housing in FIG. 1;
FIG. 3 is another exploded perspective view of a first motor housing in FIG. 1;
FIG. 4 is an exploded perspective view of a second motor housing in FIG. 1;
FIG. 5 is another exploded perspective view of a second motor housing in FIG. 1;
FIG. 6 is an exploded perspective view of a first motor pump in FIG. 1;
FIG. 7 is an exploded perspective view of a second motor pump in FIG. 1;
FIG. 8 is a cross-sectional view of the hydraulic power supply apparatus in FIG. 1;
FIG. 9 is an enlarged view at a position I in FIG. 8;
FIG. 10 is an exploded perspective view of the hydraulic power supply apparatus shown in FIG. 1;
FIG. 11 is a perspective view of a hydraulic power supply apparatus according to another preferred implementation of the present disclosure;
FIG. 12 is an exploded perspective view of a first motor housing in FIG. 11;
FIG. 13 is another exploded perspective view of a first motor housing in FIG. 11;
FIG. 14 is an exploded perspective view of a second motor housing in FIG. 11;
FIG. 15 is another exploded perspective view of a second motor housing in FIG. 11;
FIG. 16 is an exploded perspective view of a first motor pump in FIG. 11;
FIG. 17 is an exploded perspective view of a second motor pump in FIG. 11;
FIG. 18 is a cross-sectional view of the hydraulic power supply apparatus shown in FIG. 11;
FIG. 19 is an exploded perspective view of the hydraulic power supply apparatus shown in FIG. 11;
FIG. 20 is a perspective view of a hydraulic power supply apparatus according to still another preferred implementation of the present disclosure;
FIG. 21 is an exploded perspective view of an integrated motor housing and flow channel plate in FIG. 20;
FIG. 22 is another exploded perspective view of an integrated motor housing and flow channel plate in FIG. 20;
FIG. 23 is an exploded perspective view of the hydraulic power supply apparatus shown in FIG. 20;
FIG. 24 is a cross-sectional view of the hydraulic power supply apparatus shown in FIG. 20;
FIG. 25 is an exploded perspective view of the hydraulic power supply apparatus shown in FIG. 20;
FIG. 26 is a perspective view of a junction between a first electrical connection member and a first motor body according to a preferred implementation of the present disclosure;
FIG. 27 is a perspective cross-sectional view of the junction between the first electrical connection member and the first motor body in FIG. 26;
FIG. 28 is a schematic diagram of a structure of the first electrical connection member shown in FIG. 26 and FIG. 27;
FIG. 29 is a perspective view of a junction between a first electrical connection member and a first motor body according to another preferred implementation of the present disclosure;
FIG. 30 is a schematic diagram of a structure of the first electrical connection member shown in FIG. 29;
FIG. 31 is an exploded perspective view of the first electrical connection member shown in FIG. 29 and FIG. 30;
FIG. 32 is a schematic diagram of a structure of a conical cylinder shown in FIG. 29 to FIG. 31;
FIG. 33 is a perspective view of a junction between a first electrical connection member and a first motor body according to still another preferred implementation of the present disclosure; and
FIG. 34 is a perspective view of the first electrical connection member shown in FIG. 33.

### Descriptions of reference numerals:

| | | | |
|---|---|---|---|
| 100: | first motor pump | 110: | first hydraulic pump |
| 111: | first pump housing positioning post | 112: | first pump housing sealing ring |
| 113: | first connecting hole | 114: | second connecting hole |
| 120: | first motor | 121: | first motor housing |
| 121a: | first housing body | 121b: | first mounting groove |
| 121c: | first flow guide rib | 121d: | first electrical control housing positioning post |
| 121e: | first through-hole | 121g: | first wire-through hole |
| 121h: | first rotary through-hole | 121i: | motor housing positioning hole |
| 121j: | recessed seat | 121n: | first pump housing limiting hole |
| 121o: | first flow channel | 121p: | first opening |
| 121q: | second opening | 121r: | first local groove |
| 121s: | second through-hole | 121t: | first heat dissipation cavity |
| 122: | first radiator | | |
| 123: | first heat pipe | 124: | first flow channel plate |
| 124a: | first auxiliary heat dissipation element | 125: | first motor body |
| 125a: | first core sealing ring | 126: | first liquid passage joint |
| 127: | second liquid passage joint | 128: | first lead-out wire |
| 129: | first insulated sealing member | 130: | first end cover assembly |
| 131: | first end cover | 131a: | first cantilever |
| 132: | first end cover sealing ring | 140: | detection assembly |
| 141: | first sealing ring | 142: | first temperature sensor |
| 143: | second temperature sensor | 144: | first adapter board |
| 145: | adapter post | 146: | second sealing ring |
| 147: | fastening plate | 148: | second adapter board |
| 149: | adapter assembly | 150: | first rotary assembly |
| 151: | first rotary sealing ring | 152: | first rotary snap spring |
| 153: | first rotary body | 160: | first electrical connection member |
| 161: | first electrical connection terminal | 161a: | first electrical terminal |
| 161b: | second electrical terminal | 161c: | third electrical terminal |
| 162: | protrusion | 162a: | first clearance part |
| 162b: | first guide part | 162c: | abutment part |
| 162d: | second guide part | 162e: | second clearance part |
| 163: | conical cylinder | 163a: | connecting hole |
| 163b: | first end | 163c: | second end |
| 163d: | trench | 164: | base |
| 164a: | connecting groove | 165: | base |
| 166: | clamping part | 166a: | positioning groove |
| 167: | clamping port | 168: | connecting plate |
| 168a: | first connecting plate | 168b: | second connecting plate |
| 168c: | third connecting plate | 169: | second electrical connection terminal |
| 169a: | fourth electrical terminal | 169b: | fifth electrical terminal |
| 169c: | sixth electrical terminal | 200: | second motor pump |
| 210: | second hydraulic pump | 211: | second pump housing positioning |
| | | | post |
| 212: | second pump housing sealing ring | 213: | third connecting hole |
| 214: | fourth connecting hole | 220: | second motor |
| 221: | second motor housing | 221a: | second housing body |
| 221b: | second mounting groove | 221c: | second flow guide rib |
| 221d: | second electrical control housing positioning post | 221e: | third through-hole |
| 221g: | second wire-through hole | 221h: | second rotary through-hole |
| 221i: | motor housing positioning post | 221j: | boss |
| 221n: | second pump housing limiting hole | 221o: | second flow channel |
| 221p: | third opening | 221q: | fourth opening |
| 221r: | second local groove | 221s: | fourth through-hole |
| 221t: | second heat dissipation cavity | 222: | second radiator |
| 223: | second heat pipe | 224: | second flow channel plate |
| 224a: | second auxiliary heat dissipation element | 225: | second motor body |
| 225a: | second core sealing ring | | |
| 226: | third liquid passage joint | 227: | fourth liquid passage joint |
| 228: | second lead-out wire | 229: | second insulated sealing member |
| 230: | second end cover assembly | 231: | second end cover |
| 231a: | second cantilever | 232: | second end cover sealing ring |
| 250: | second rotary assembly | 251: | second rotary sealing ring |
| 252: | second rotary snap spring | 253: | second rotary body |
| 260: | second electrical connection member | 300: | motor controller |
| 310: | electrical control housing | 320: | signal connector |
| 330: | bus electrical terminal | 340: | breather valve |
| 350: | shielding plate | 360: | control circuit board |
| 370: | drive circuit board | 371: | power component |
| 372: | alternating-current terminal | 373: | direct-current terminal |
| 375: | capacitor | 376: | first power component |
| 377: | second power component | 400: | accommodating groove |
| 500: | motor housing | | |
| 500a: | accommodating groove | 500c: | flow-through groove |
| 500e: | first mounting groove | 500f: | first flow guide rib |
| 500g: | first through-hole | 500i: | first flow channel |
| 500j: | first liquid passage port | 500k: | second liquid passage port |
| 500m: | second mounting groove | 500n: | second flow guide rib |
| 500o: | third through-hole | 500q: | second flow channel |
| 500r: | third liquid passage port | 500s: | fourth liquid passage port |
| 500t: | second through-hole | 500u: | fourth through-hole |
| 501: | flow-through cover plate | 502: | flow channel plate |
| 502a: | auxiliary heat dissipation element | 502b: | positioning boss |
| 503: | first liquid passage joint | 504: | second liquid passage joint |
| 600: | hydraulic power supply apparatus | 700: | motor assembly |
| D1: | first direction | D2: | second direction, axial direction |
| D3: | third direction | DY1: | first extension direction |
| DY2: | second extension direction | DY3: | third extension direction |

### DESCRIPTION OF EMBODIMENTS

In the following description, a large quantity of specific details are provided to provide a more thorough understanding of the present disclosure. It is obvious to a person skilled in the art, however, that the implementations of the present disclosure can be implemented without the need for one or more of these details. In another example, to avoid confusion with the implementations of the present disclosure, some technical features well-known in the art are not described.

For a thorough understanding of the implementations of the present disclosure, detailed structures will be proposed in the following description. Clearly, implementation of the implementations of the present disclosure is not limited to special details familiar to a person skilled in the art.

It will be understood that the terms used herein are merely intended to describe specific implementations and constitute no limitation on the present disclosure. Singular forms "one", "a", and "the" are also intended to include plural forms, unless another manner is clearly indicated in the context. When the term "include" and/or "comprise" are/is used in this specification, it indicates existence of the features, entireties, steps, operations, elements, and/or components, but does not exclude existence or addition of one or more other features, entireties, steps, operations, elements, components, and/or combinations thereof.

Ordinal numbers such as "first" and "second" referenced in the present disclosure are merely identifiers and do not have any other meaning, for example, a specific order. Moreover, for example, the term "first part" does not imply existence of "second part", and the term "second part" does not imply existence of "first part". It will be noted that the terms "top", "bottom", "front", "back", "left", "right", "inside", "outside", and the like used in the present disclosure are merely for purposes of description, and constitute no limitation.

Specific implementations of the present disclosure are described in detail below with reference to the accompanying drawings. The accompanying drawings illustrate representative implementations of the present disclosure and are not intended to limit the present disclosure.

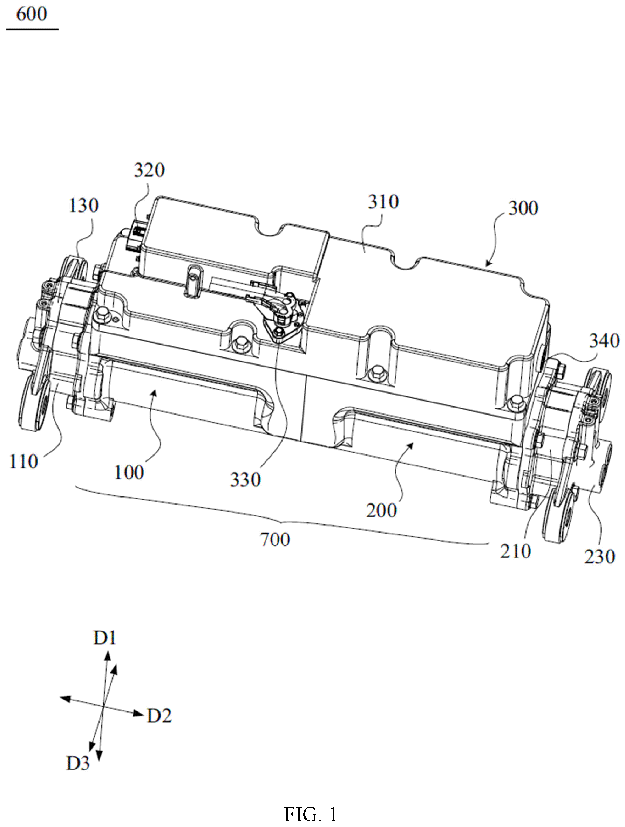

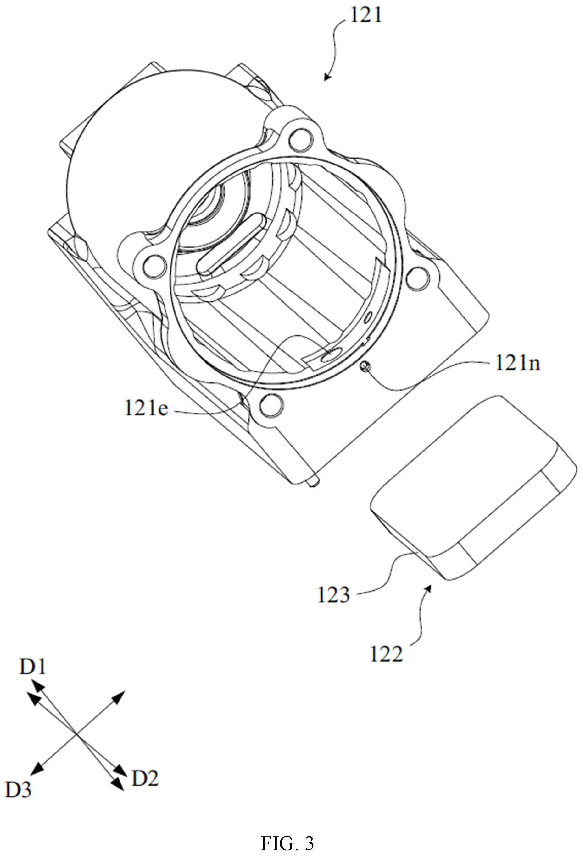

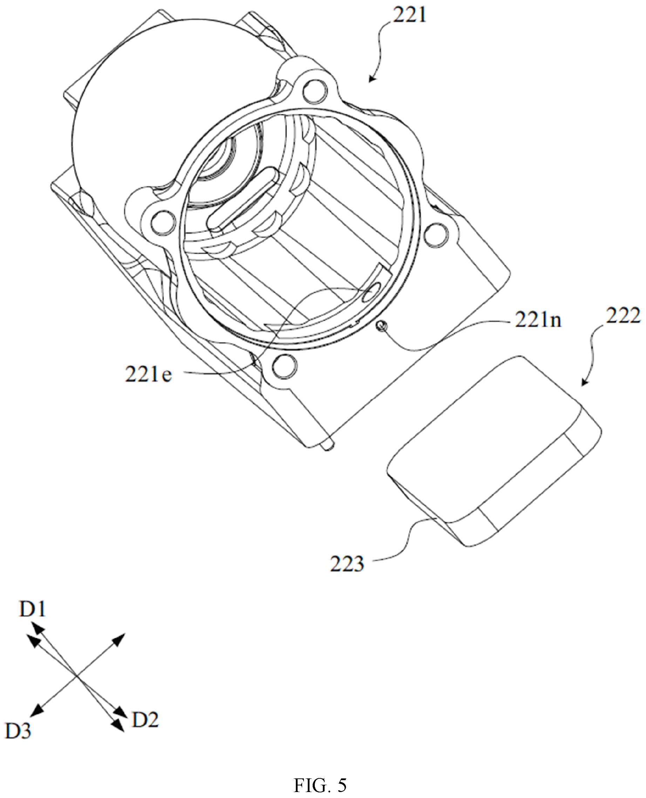

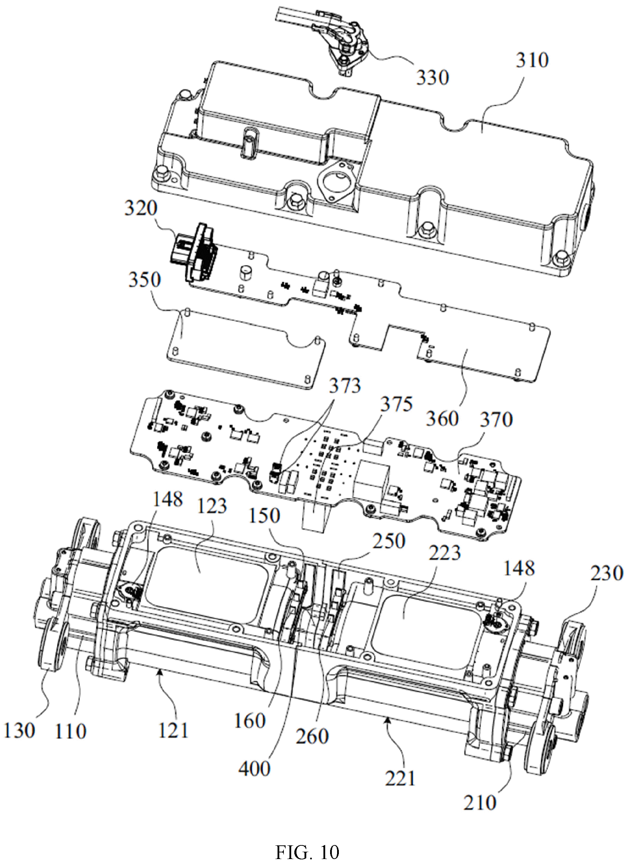

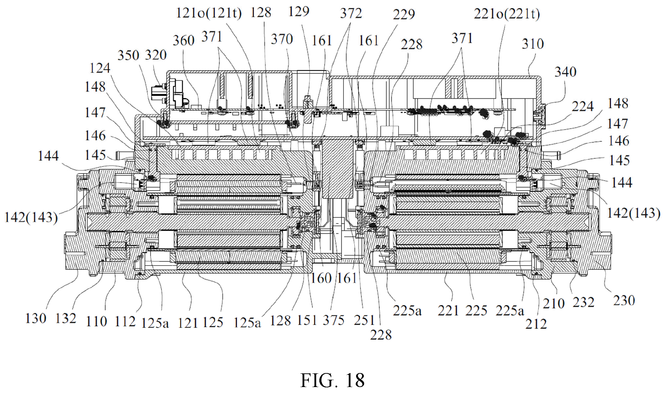

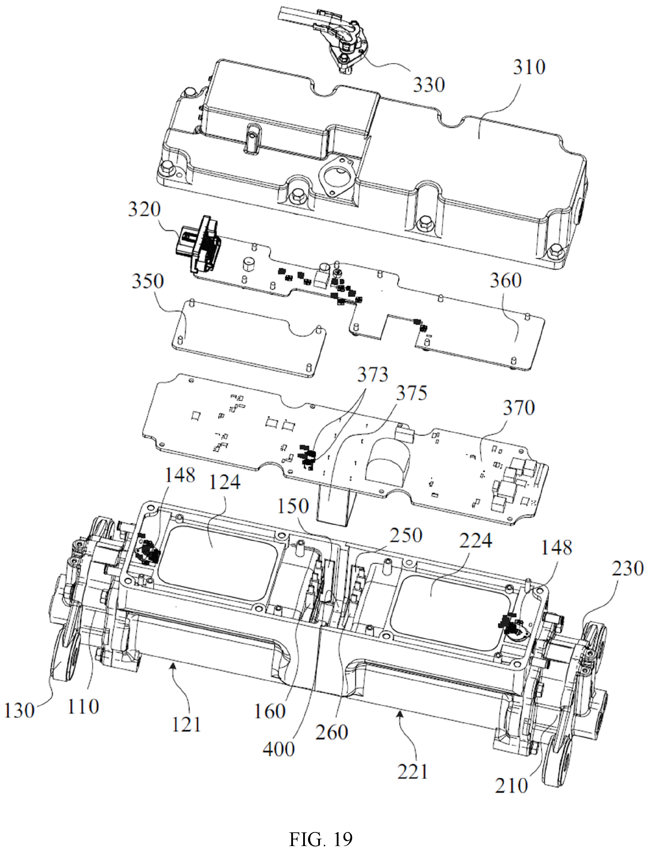

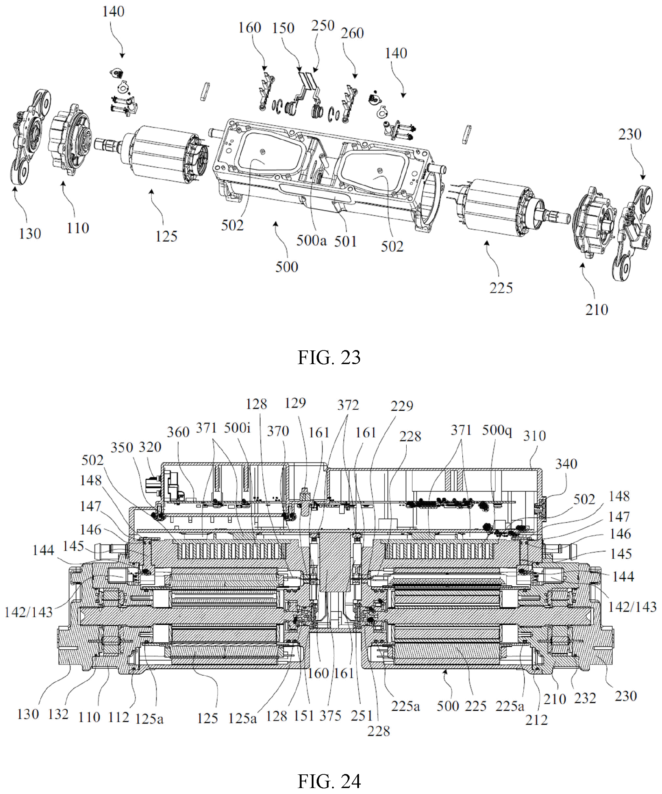

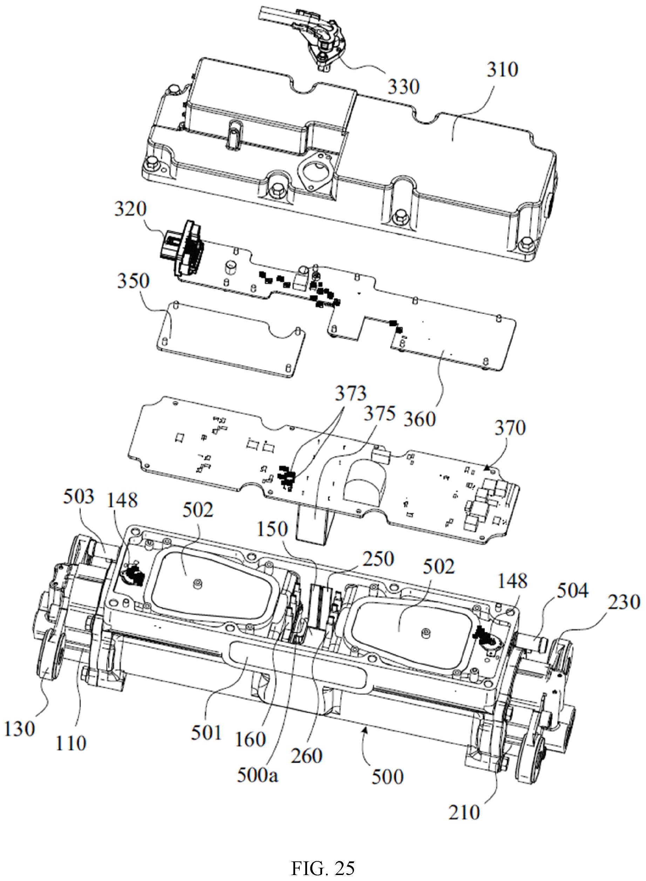

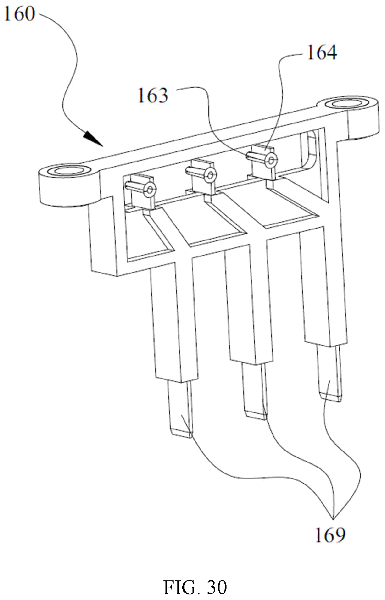

The present disclosure provides a hydraulic power supply apparatus 600. The hydraulic power supply apparatus 600 herein may be used in an active chassis system. The active chassis system may actively adjust a shock absorber based on different road conditions, thereby improving comfort and safety of a vehicle chassis. As shown in FIG. 1 to FIG. 34, the hydraulic power supply apparatus 600 according to the present disclosure may include a motor pump, a motor controller, and a radiator. The motor pump may include a hydraulic pump and a motor configured to drive the hydraulic pump. Two motor pumps may form a motor pump group. Power of the motor pump group may be greater than 8 KW, for example, may be 9 KW. The motor and the motor controller may form a motor assembly 700. The motor may include a motor body and a motor housing. The motor body may include a stator and a rotor. The stator includes a stator winding and a stator core. The stator winding is connected to the stator core. The stator winding includes a winding body and a lead-out wire. The lead-out wire includes a root end and a tip end in a length direction of the lead-out wire, that is, two ends of the lead-out wire. The root end of the lead-out wire is connected to the winding body, and is fastened to the stator core. For example, the root end of the lead-out wire is wound around the stator core, or a busbar is disposed at an end of the winding that is connected to the lead-out wire. The lead-out wire is fixedly connected to the busbar. For example, a three-phase motor includes three phases of windings and three lead-out wires corresponding to the three phases of windings. The three phases of windings are all connected to the busbar. The busbar is then connected to the three lead-out wires. The three lead-out wires may be in an integrated structure with the busbar. The tip end of the lead-out wire is connected to an adapter copper busbar. The foregoing motor pump group includes two motors. The two motors may be respectively denoted as a first motor 120 and a second motor 220. The first motor 120 includes a first winding body and a first lead-out wire 128. The second motor 220 includes a second winding body and a second lead-out wire 228. A motor controller 300 is disposed on an outer side of the motor in a first direction D1. In a mounting state in which the hydraulic power supply apparatus 600 is mounted on a vehicle, the first direction D1 may be consistent with a height direction of the vehicle. In this case, the motor controller 300 may be located above the motor. The radiator is located between the motor and the motor controller, and is thermally connected to the motor and the motor controller. The radiator is configured to conduct heat of the motor controller to cool the motor controller.

According to the hydraulic power supply apparatus 600 in the present disclosure, the radiator is disposed between the motor and the motor controller 300 to conduct heat of the motor and the motor controller, 300, thereby helping dissipate heat from the motor controller 300, and improving running efficiency of the motor controller 300.

Referring to FIG. 1 to FIG. 19, for example, the hydraulic power supply apparatus 600 according to the present disclosure may include a first motor pump 100, a motor controller 300, and a first radiator 122. The first motor pump 100 may include a first hydraulic pump 110 and a first motor 120 configured to drive the first hydraulic pump 110. The motor controller 300 is disposed on an outer side of the first motor 120 in the first direction D1. In a mounting state in which the hydraulic power supply apparatus 600 is mounted on a vehicle, the first direction D1 may be consistent with a height direction of the vehicle. In this case, the motor controller 300 may be located above the first motor 120. The motor controller 300 may alternatively be disposed on a side of the motor in a length direction of a vehicle body. For example, when the motor controller 300 is mounted on a front axle of the vehicle, the motor controller 300 may be located on a rear side of the first motor 120. When the motor controller 300 is mounted on a rear axle of the vehicle, the motor controller 300 may be located on a front side of the first motor 120. In such an arrangement, the first direction D1 correspondingly changes. In the following description, the present disclosure continues to be described by using the first direction D1 being a height of the vehicle body, but D1 may also be the length direction. When a direction defined by D1 changes, another direction using D1 as a reference is correspondingly adjusted. The first radiator 122 is located between the first motor 120 and the motor controller 300, and is thermally connected to the first motor 120 and the motor controller 300. The first radiator 122 is configured to conduct heat of the first motor 120 and the motor controller 300. The first radiator is disposed between the first motor and the motor controller 300 to conduct heat of the first motor and the motor controller 300, thereby helping dissipate heat from the motor controller 300, and improving running efficiency of the motor controller 300.

With continued reference to FIG. 1 to FIG. 19, in addition, the hydraulic power supply apparatus 600 may further include a second motor pump 200 and a second radiator 222. The second motor pump 200 and the first motor pump 100 are sequentially arranged in a second direction D2. The second direction D2 is parallel to an axis of the first motor 120. The axis of the first motor 120 herein will be understood as a rotation axis of a rotor of the first motor 120, or will be understood as an axis of the rotor of the first motor 120. In other words, the first motor pump 100 and the second motor pump 200 are coaxially arranged opposite to each other. The "arranged opposite to each other" or "disposed opposite to each other" herein will be understood as the first motor 120 and the second motor 220 being sequentially arranged in opposite orientations, (for example, output ends of the first motor 120 and the second motor 220 separately face sides away from each other, or are disposed close to each other), rather than the two motors being sequentially arranged in the same orientation. In this embodiment of the present disclosure, the output ends of the two motors are respectively disposed at two ends in an axial direction D2 of the motor assembly 700. When the two motors are applied to a motor-pump assembly, the two motors are disposed opposite to each other, thereby help the two motors share the motor controller 300, and facilitating output the arrangement of the hydraulic pump. The second motor pump 200 may include a second hydraulic pump 210 and a second motor 220 configured to drive the second hydraulic pump 210. The first motor 120 is connected to the second motor 220. The motor controller 300 is located on an outer side of the second motor 220 in the first direction D1. The second radiator 222 is located between the second motor 220 and the motor controller 300, and is thermally connected to the second motor 220 and the motor controller 300. The second radiator 222 is configured to conduct heat of the second motor 220 and the motor controller 300. In this embodiment, the hydraulic power supply apparatus 600 includes two motor pumps, and controls the two motor pumps through the motor controller 300. The first radiator 122 is disposed between the motor controller 300 and the first motor 120, and the second radiator 222 is disposed between the motor controller 300 and the second motor 220, so that heat dissipation can be performed on parts of the motor controller 300 that respectively correspond to the first motor 120 and the second motor 220. In this way, a heat dissipation effect of the motor controller 300 can be improved, thereby improving running efficiency and running stability of the motor controller 300.

Optionally, there may be one or two motor controllers. When there is one motor controller, electrical elements and/or components located in the motor controller may be integrated into a corresponding circuit board, or two integrated circuit boards with the same function may be provided. When there are two motor controllers, one integrated circuit board is disposed for each of the two motor controllers, and the two integrated circuit boards may be the same.

Referring to FIG. 1 to FIG. 10, two radiators are provided. The two radiators are respectively denoted as the first radiator 122 and the second radiator 222.

With continued reference to FIG. 1 to FIG. 10, in an example, the first radiator 122 is a first heat pipe 123. The first heat pipe 123 herein may include a closed housing and a heat-conducting medium sealed inside the housing. The heat-conducting medium is gasified upon heating, so that the first heat pipe 123 can absorb external heat, thereby achieving a cooling effect. The heat-conducting medium is liquefied upon cooling, so that the first heat pipe 123 can release heat to the outside, thereby achieving a heat dissipation effect. In this embodiment, the first heat pipe 123 may absorb heat of the motor controller 300 and transfer the heat to the first motor 120. The first motor 120 is connected to the first hydraulic pump 110, and there is also a part of a hydraulic circuit inside the first motor 120, so that the heat can be removed through the hydraulic circuit. The hydraulic circuit can be further cooled in another evaporative cooling method. The first heat pipe 123 herein may be manufactured and implemented with reference to a mechanism of a heat pipe in the conventional technologies. A shape of the first heat pipe 123 may be any shape, such as any one of a square, a circle, or a polygon, may be a regular shape, or may be an irregular shape. Correspondingly, the second radiator 222 may be a second heat pipe 223. The second heat pipe 223 herein may include a closed housing and a heat-conducting medium sealed inside the housing. The heat-conducting medium is gasified upon heating, so that the second heat pipe 223 can absorb external heat, thereby achieving a cooling effect. The heat-conducting medium is liquefied upon cooling, so that the second heat pipe 223 can release heat to the outside, thereby achieving a heat dissipation effect. In this embodiment, the second heat pipe 223 may absorb heat of the motor controller 300 and transfer the heat to the second motor 220. The second motor 220 is connected to the second hydraulic pump 210, and there is also a part of a hydraulic circuit inside the second motor 220, so that the heat can be removed through the hydraulic circuit. The hydraulic circuit can be further cooled in another evaporative cooling method. The second heat pipe 223 herein may be manufactured and implemented with reference to a mechanism of a heat pipe in the conventional technologies. A shape of the second heat pipe 223 may be any shape, such as any one of a square, a circle, or a polygon, may be a regular shape, or may be an irregular shape.

Referring to FIG. 1 to FIG. 10, further, the first motor 120 may include a first motor housing 121. The first heat pipe 123 is disposed in the first motor housing 121. Herein, a groove may be provided in the first motor housing 121, and the first heat pipe 123 is disposed in the groove. This facilitates separate manufacturing of the first heat pipe 123 and the first motor housing 121. Correspondingly, the second motor 220 may include a second motor housing 221. The second heat pipe 223 is disposed in the second motor housing 221. Herein, a groove may be provided in the second motor housing 221, and the second heat pipe 223 is disposed in the groove. This facilitates separate manufacturing of the second heat pipe 223 and the second motor housing 221. The first motor housing 121 is connected to the second motor housing 221 to form a common housing. The common housing is a non-detachable housing.

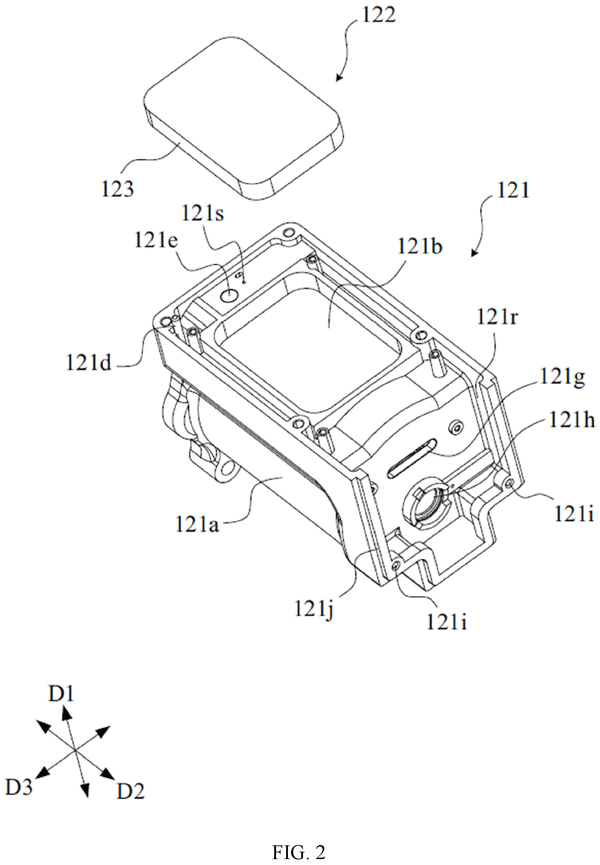

As shown in FIG. 2, FIG. 3, FIG. 6, FIG. 8, and FIG. 10, the first motor housing 121 has the first heat pipe 123 and a groove used to assemble the first heat pipe 123. Due to good thermal conductivity of the heat pipe, the first heat pipe 123 is added herein to better perform heat dissipation on a power component 371 of the motor controller 300. The power component 371 may be connected to the first heat pipe 123 through a heat-conducting medium such as heat-conducting silicone grease or a heat-conducting structure. The first motor housing 121 further has a first electrical control housing positioning post 121d, configured to fit with a positioning hole (not shown) of an electrical control housing 310 to perform limiting. The first motor housing 121 further has a motor housing positioning hole 121i, configured to perform limiting when being assembled with the second motor housing 221. The first motor housing 121 further has a first through-hole 121e, configured to mount a temperature sensor. The first motor housing 121 further has a recessed seat 121j, which may be configured to tightly fit with a boss 221j of the second motor housing 221, to implement friction welding.

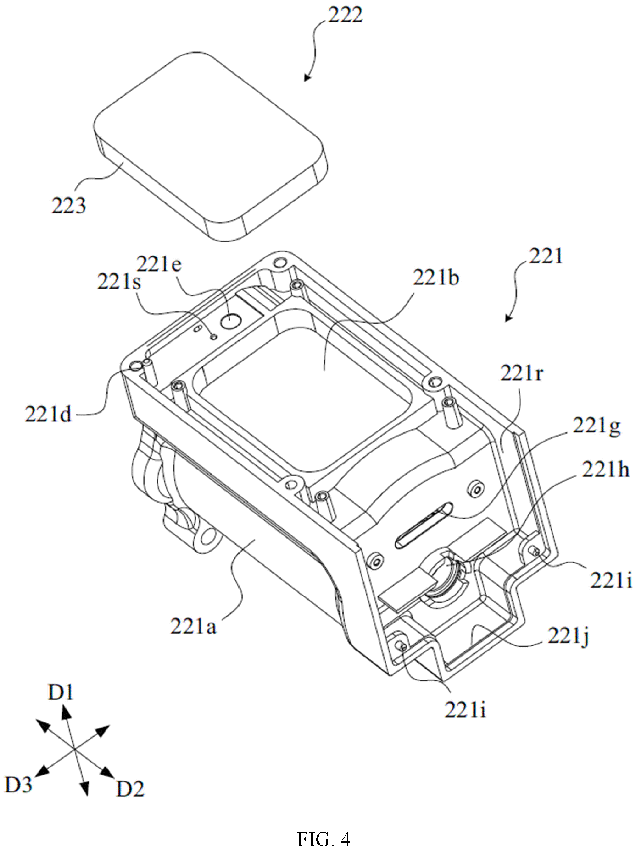

As shown in FIG. 4, FIG. 5, FIG. 7, and FIG. 10, the second motor housing 221 has the second heat pipe 223 and a groove used to assemble the heat pipe. Due to good thermal conductivity of the heat pipe, the second heat pipe 223 is added herein to better perform heat dissipation on a power component 371 of the motor controller 300. The power component 371 may be connected to the second heat pipe 223 through a heat-conducting medium such as heat-conducting silicone grease or a heat-conducting structure. The second motor housing 221 further has a second electrical control housing positioning post 221d, configured to fit with a positioning hole (not shown) of an electrical control housing 310 to perform limiting. The second motor housing 221 further has a motor housing positioning hole 121i, configured to perform limiting when being assembled with the second motor housing 221. The second motor housing 221 further has a third through-hole 221e, configured to mount a second temperature sensor. The second motor housing 221 further has the boss 221j, which may be configured to closely fit with the recessed seat 121j of the first motor housing 121, to implement friction welding.

Referring to FIG. 1, FIG. 8, and FIG. 10, for example, the motor controller 300 may include the electrical control housing 310. The electrical control housing 310 is connected to the first motor housing 121 and the second motor housing 221. The first radiator 122 is located between the electrical control housing 310 and the first motor housing 121. The second radiator 222 is located between the electrical control housing 310 and the second motor housing 221.

Referring to FIG. 2 to FIG. 10, further, an accommodating groove 400 is formed at a junction between the first motor housing 121 and the second motor housing 221. Specifically, the first motor 120 includes a first motor body 125. The second motor 220 includes a second motor body 225. The first motor body 125 and the second motor body 225 each include a stator and a rotor. The stator includes a stator winding and a stator core. The accommodating groove 400 is provided between the first motor body 125 and the second motor body 225. The accommodating groove 400 is formed in the first motor housing 121 and the second motor housing 221. An opening of the accommodating groove 400 faces the motor controller 300. The accommodating groove 400 may be configured to accommodate at least electrical elements or components such as a capacitor 375 of the motor controller 300. The capacitor 375 may be connected to the power component 371 corresponding to the first heat pipe 123 and the power component 371 corresponding to the second heat pipe 223. This helps integrate the motor controllers 300 of the two motors together, so that the two power components 371 share one capacitor 375, thereby improving integration of the motor controller 300.

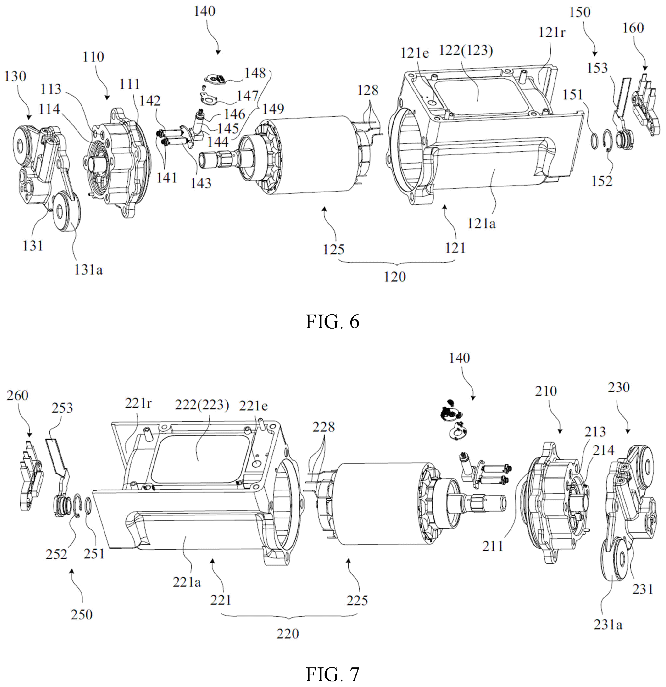

Further, an end part of a first housing body 121a of the first motor housing 121 that faces the second motor housing 221 is recessed to form a first local groove 121r (as shown in FIG. 2 and FIG. 6). An end part of a second housing body 221a of the second motor housing 221 that faces the first motor housing 121 is recessed to form a second local groove 221r (as shown in FIG. 4 and FIG. 7). The first local groove 121r and the second local groove 221r form the accommodating groove 400 after the first motor housing 121 and the second motor housing 221 are assembled. Locations of the accommodating groove 400 herein relative to the first motor and the second motor may be the same as locations of the following accommodating groove 500a relative to the first motor and the second motor, and the accommodating groove 400 herein may implement the same function as the following accommodating groove 500a.

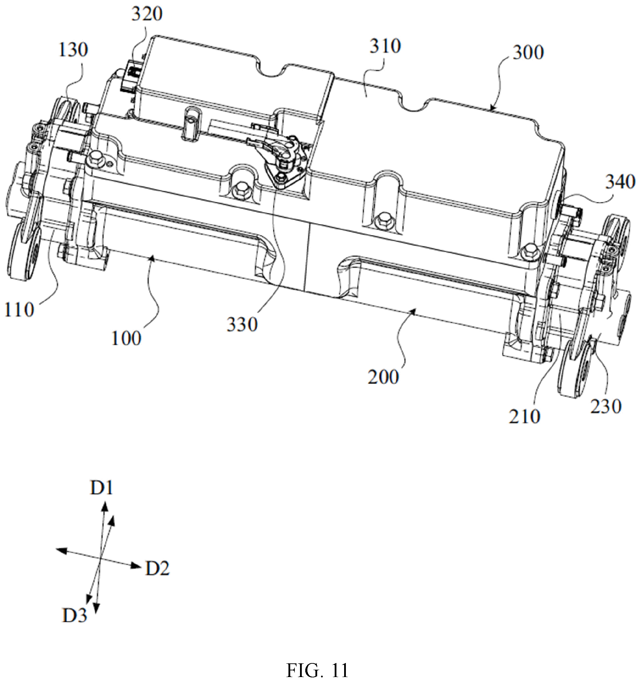

Referring to FIG. 11 to FIG. 19, in another example, the first motor 120 may include a first motor housing 121. The first radiator 122 is formed in the first motor housing 121. A first flow channel 121o is formed inside the radiator. The first flow channel 121o is used for circulation of a heat exchange medium. Heat generated by the motor controller 300 may be exchanged through the heat exchange medium, thereby achieving an effect of heat dissipation and cooling of the motor controller 300. In addition, the heat exchange medium in the first flow channel 121o may perform heat exchange at another part of a heat exchange circuit, to cool the heat exchange medium. Correspondingly, the second motor 220 may include a second motor housing 221. The second radiator 222 is formed in the second motor housing 221. A second flow channel 221o is formed inside the second radiator 222. The second flow channel 221o is used for circulation of a heat exchange medium. Heat generated by the motor controller 300 may be exchanged through the heat exchange medium, thereby achieving an effect of heat dissipation and cooling. In addition, the heat exchange medium in the second flow channel 221o may perform heat exchange at another part of a heat exchange circuit, to cool the heat exchange medium.

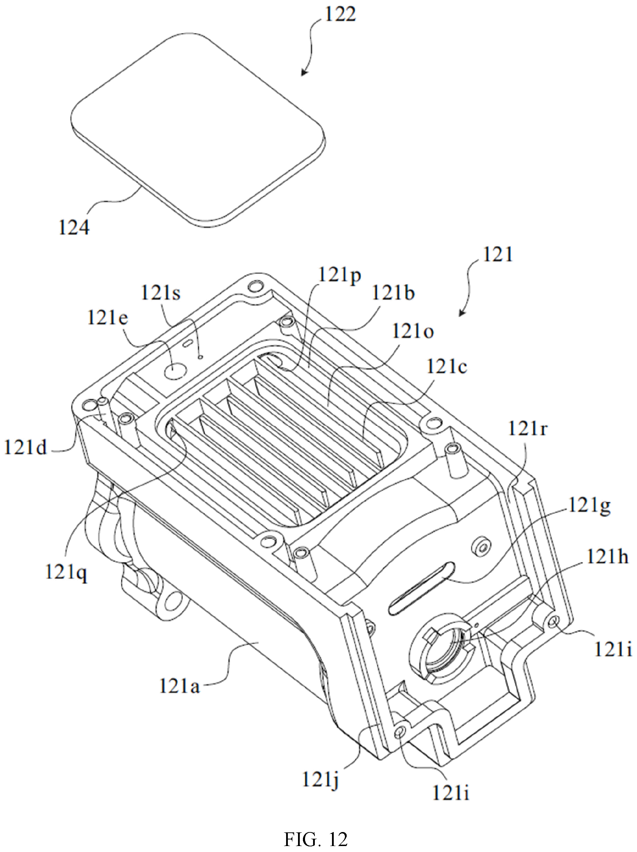

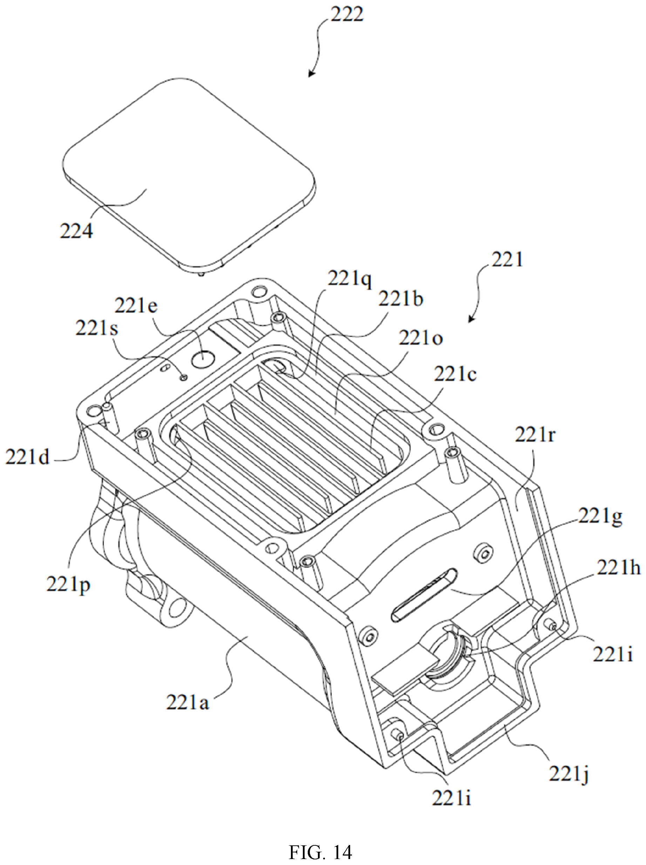

Referring to FIG. 12 and FIG. 14, for example, the first flow channel 121o is arranged in a meandering shape. The first flow channel 121o is disposed in a meandering shape or a serpentine shape to help increase residence time of the heat exchange medium in the first flow channel 121o, to exchange heat with the motor controller 300 more fully, thereby achieving a better heat dissipation effect. The meandering shape herein is not limited to the form shown in the figure, and may be any other form in which an extension length of the first flow channel 121o can be increased in an area of the same size. Correspondingly, the second flow channel 221o is arranged in a meandering shape. The second flow channel 221o is disposed in a meandering shape or a serpentine shape to help increase residence time of the heat exchange medium in the second flow channel 221o, to exchange heat with the motor controller 300 more fully, thereby achieving a better heat dissipation effect. The meandering shape herein is not limited to the form shown in the figure, and may be any other form in which an extension length of the second flow channel 221o can be increased in an area of the same size.

Referring to FIG. 12 to FIG. 19, further, the first motor housing 121 may include a first housing body 121a, a first flow channel plate 124, and a first flow guide rib 121c. A first mounting groove 121b is provided at a part of the first housing body 121a that faces the motor controller 300. The first flow channel plate 124 is connected to the first mounting groove 121b to close an opening of the first mounting groove 121b to form a first heat dissipation cavity 121t. In other words, the first flow channel plate 124 covers the first mounting groove 121b, to form the first heat dissipation cavity 121t between the first flow channel plate 124 and the first housing body 121a. The first heat dissipation cavity 121t may accommodate a heat exchange medium. The first flow channel plate 124 supports the motor controller 300, to absorb heat from the motor controller 300, thereby improving heat exchange efficiency. The first flow guide rib 121c is connected to the first heat dissipation cavity 121t, to define the first heat dissipation cavity 121t as the first flow channel 121o. The first flow guide rib 121c is disposed in the first heat dissipation cavity 121t, to obtain the first flow channel 121o by dividing the first heat dissipation cavity 121t. In short, an inner surface of the first mounting groove 121b, the first flow guide rib 121c, and the first flow channel plate 124 form the first flow channel 121o. Correspondingly, the second motor housing 221 may include a second housing body 221a, a second flow channel plate 224, and a second flow guide rib 221c. A second mounting groove 221b is provided at a part of the second housing body 221a that faces the motor controller 300. The second flow channel plate 224 is connected to the second mounting groove 221b to close an opening of the second mounting groove 221b to form a second heat dissipation cavity 221t. In other words, the second flow channel plate 224 covers the second mounting groove 221b, to form the second heat dissipation cavity 221t between the second flow channel plate 224 and the second housing body 221a. The second heat dissipation cavity 221t may accommodate a heat exchange medium. The second flow channel plate 224 supports the motor controller 300, to absorb heat from the motor controller 300, thereby improving heat exchange efficiency. The second flow guide rib 221c is connected to the second heat dissipation cavity 221t, to define the second heat dissipation cavity 221t as the second flow channel 221o. The second flow guide rib 221c is disposed in the second heat dissipation cavity 221t, to obtain the second flow channel 221o by dividing the second heat dissipation cavity 221t. In short, an inner surface of the second mounting groove 221b, the second flow guide rib 221c, and the second flow channel plate 224 form the second flow channel 221o.

Further, referring to FIG. 12, FIG. 13, FIG. 16, FIG. 18, and FIG. 19, the first flow channel plate 124 may include a first auxiliary heat dissipation element 124a extending to the first flow channel 121o. The first auxiliary heat dissipation element 124a is disposed on the first flow channel plate 124, to increase a contact area between the first flow channel plate 124 and a heat exchange medium in the first flow channel plate 124, thereby further improving heat exchange efficiency. Correspondingly, referring to FIG. 14, FIG. 15, and FIG. 17 to FIG. 19, the second flow channel plate 224 may include a second auxiliary heat dissipation element 224a extending to the second flow channel 221o. The second auxiliary heat dissipation element 224a is disposed on the second flow channel plate 224, to increase a contact area between the second flow channel plate 224 and a heat exchange medium in the second flow channel plate 224, thereby further improving heat exchange efficiency.

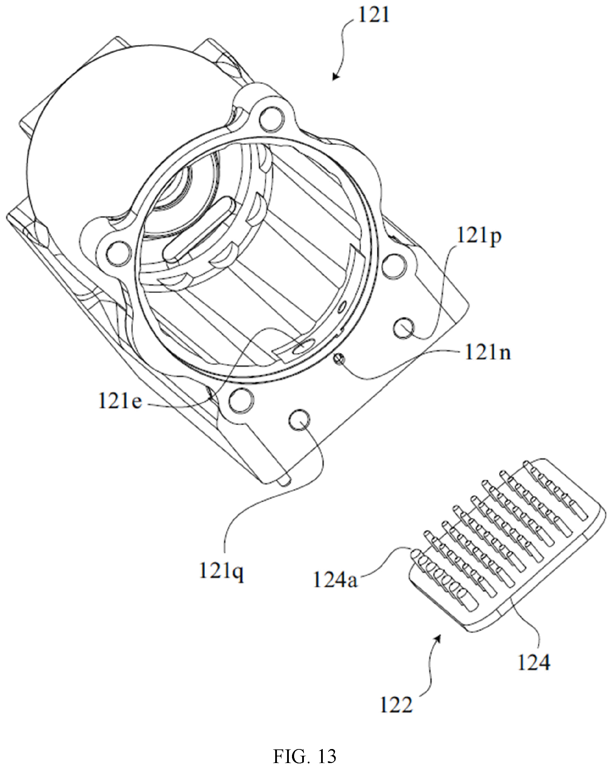

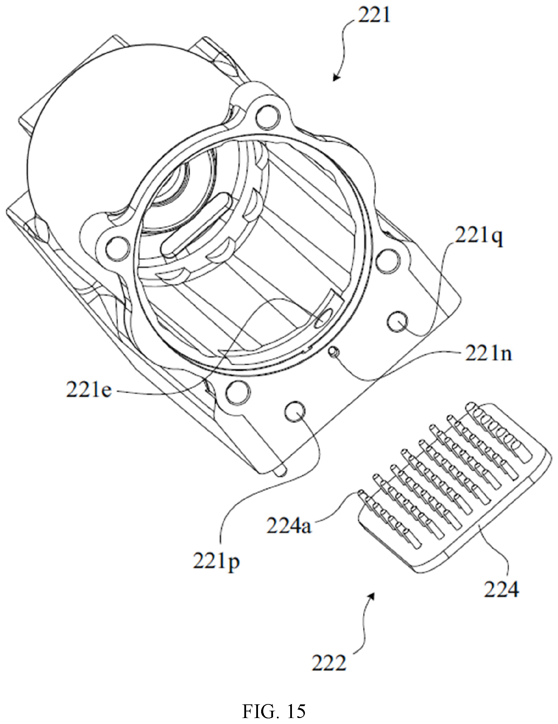

Specifically, as shown in FIG. 13, the first auxiliary heat dissipation element 124a may be configured as a first heat dissipation pin. The first heat dissipation pin extends in a groove depth direction of the first mounting groove 121b. The first flow channel plate 124 may include a plurality of first heat dissipation pins. The first heat dissipation pins are spaced apart along an arrangement path adapted to the first flow channel 121o. To be specific, when the first flow channel plate 124 covers the opening of the first mounting groove 121b, the first heat dissipation pin is located in the first flow channel 121o, and the first heat dissipation pin and the first flow guide rib 121c are staggered from each other. Correspondingly, as shown in FIG. 15, the second auxiliary heat dissipation element 224a may be configured as a second heat dissipation pin. The second heat dissipation pin extends in a groove depth direction of the second mounting groove 221b. The second flow channel plate 224 may include a plurality of second heat dissipation pins. The second heat dissipation pins are spaced apart along an arrangement path adapted to the second flow channel 221o. To be specific, when the second flow channel plate 224 covers the opening of the second mounting groove 221b, the second heat dissipation pin is located in the second flow channel 221o, and the second heat dissipation pin and the second flow guide rib 221c are staggered from each other.

Referring to FIG. 11, FIG. 18, and FIG. 19, for example, the motor controller 300 may include an electrical control housing 310. The electrical control housing 310 is connected to the first motor housing 121 and the second motor housing 221. The first radiator 122 is located between the electrical control housing 310 and the first motor housing 121. The second radiator 222 is located between the electrical control housing 310 and the second motor housing 221.

Referring to FIG. 12, FIG. 14, and FIG. 16 to FIG. 19, further, an accommodating groove 400 is formed at a junction between the first motor housing 121 and the second motor housing 221. The accommodating groove 400 may be configured to accommodate at least electrical elements or components such as a capacitor 375 of the motor controller 300. The capacitor 375 may be connected to a power component 371 corresponding to the first heat pipe 123 and a power component 371 corresponding to the second heat pipe 223. This helps integrate the motor controllers 300 of the two motors together, so that the two power components 371 share one capacitor 375, thereby improving integration of the motor controller 300.

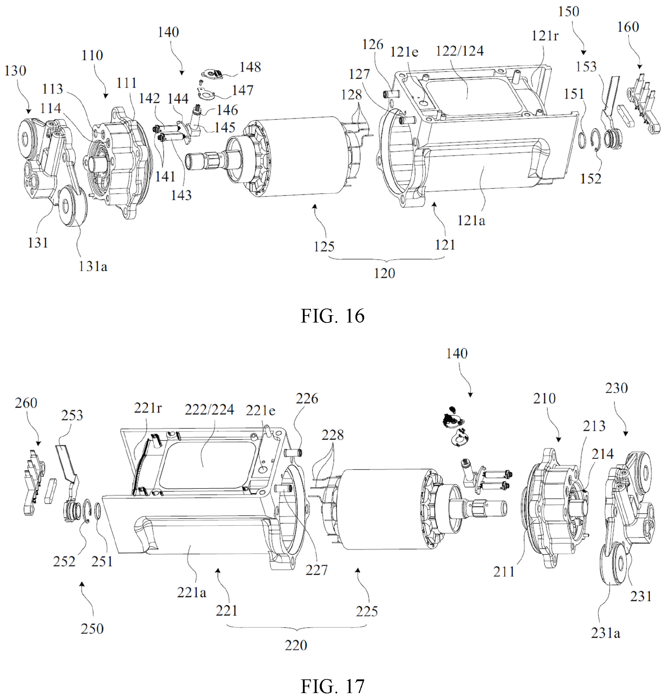

Referring to FIG. 12 to FIG. 19, further, an end part of a first housing body 121a of the first motor housing 121 that faces the second motor housing 221 is recessed to form a first local groove 121r (as shown in FIG. 12 and FIG. 16). An end part of a second housing body 221a of the second motor housing 221 that faces the first motor housing 121 is recessed to form a second local groove 221r (as shown in FIG. 14 and FIG. 17). The first local groove 121r and the second local groove 221r form the accommodating groove 400 after the first motor housing 121 and the second motor housing 221 are assembled. Locations of the accommodating groove 400 herein relative to the first motor and the second motor may be the same as locations of the following accommodating groove 500a relative to the first motor and the second motor, and the accommodating groove 400 herein may implement the same function as the following accommodating groove 500a.

Referring to FIG. 11, FIG. 18, and FIG. 19, optionally, the electrical control housing 310 may be fastened to the first motor housing 121 and the second motor housing 221 through fasteners such as bolts. It will be understood that, to facilitate positioning and assembly of the electrical control housing 310 with the first motor housing 121 and the second motor housing 221 respectively, a positioning structure may be separately disposed at a corresponding location between the electrical control housing 310 and the first motor housing 121 and at a corresponding location between the electrical control housing 310 and the second motor housing 221. The positioning structure herein may be divided into two parts. A part of the positioning structure is disposed in the electrical control housing 310, and the other part of the positioning structure is disposed in the first motor housing 121 and the second motor housing 221. One of the two parts of the positioning structure may be configured as a positioning hole, and the other part may be configured as a positioning post adapted to the positioning hole.

Referring to FIG. 1 to FIG. 19, in an embodiment of the present disclosure, the first motor housing 121 may be welded to the second motor housing 221 in a means of welding of friction welding to form a common housing. The common housing herein is a non-detachable housing. In a welding process, the first motor housing 121 and the second motor housing 221 may be mutually limited by using the motor housing positioning hole 121i on the first motor housing 121 and the motor housing positioning post 221i on the second motor housing 221. In this way, the recessed seat 221j of the first motor housing 121 may be tightly attached to the boss 121j of the second motor housing 221, so that a connection structure between the first motor housing 121 and the second motor housing 221 is more secure after friction welding.

For example, the recessed seat 121j (as shown in FIG. 2 and FIG. 6) is formed on an end part of the first motor housing 121 in the second direction D2, and the boss 221j (as shown in FIG. 4 and FIG. 7) is formed on an end part of the second motor housing 221 in the second direction D2. The boss 221j is adapted to the recessed seat 121j. The boss 221j is fastened to the recessed seat 121j through welding. Fitting between the recessed seat 121j and the boss 221j facilitates positional assembly of the first motor housing 121 and the second motor housing 221. The first motor housing 121 is connected to the second motor housing 221 by means of welding, to improve stability of the connection structure between the first motor housing 121 and the second motor housing 221. In addition, when a proper welding process is used, sealing performance at a junction between the first motor housing 121 and the second motor housing 221 can be better and more persistently maintained.

It will be understood that, if the first motor housing 121 is connected to the second motor housing 221 by means of welding, the means of welding may be not limited to friction welding. For example, another means of welding that can ensure stability of the connection structure between the first motor housing 121 and the second motor housing 221 and sealing performance at the junction may be selected.

Referring to FIG. 11 to FIG. 19, when the first motor housing 121 and the second motor housing 221 are separately manufactured and then assembled into an integrated dual-motor housing, the first flow channel 121o and the second flow channel 221o may be connected in parallel. In other words, the first flow channel 121o and the second flow channel 221o are independent of each other in the first motor housing 121 and the second motor housing 221. To be specific, the first flow channel 121o and the second flow channel 221o are separately connected to a corresponding apparatus through a pipeline outside the hydraulic power supply apparatus 600. For example, the first flow channel 121o and the second flow channel 221o are each connected to a heat exchange circuit of an air conditioner, to share a heat exchange medium with the air conditioner. A connection means in which the first flow channel 121o and the second flow channel 221o are connected in parallel is applicable to an implementation in which the first motor housing 121 and the second motor housing 221 are separately manufactured and then assembled together, and the first motor housing 121 and the second motor housing 221 share the accommodating groove 400. The accommodating groove 400 herein affects the arrangement of the first flow channel 121o and the second flow channel 221o.

Specifically, as shown in FIG. 12 and FIG. 13, the first flow channel 121o has a first opening 121p and a second opening 121q. The first opening 121p allows a heat exchange medium to flow into the first flow channel 121o, and the second opening 121q allows a heat exchange medium to flow out of the first flow channel 121o. As shown in FIG. 14 and FIG. 15, the second flow channel 221o has a third opening 221p and a fourth opening 221q. The third opening 221p allows a heat exchange medium to flow into the second flow channel 221o, and the fourth opening 221q allows a heat exchange medium to flow out of the second flow channel 221o. The first opening 121p and the second opening 121q are connected to the heat exchange circuit of the air conditioner through a set of pipelines. The third opening 221p and the fourth opening 221q are connected to the heat exchange circuit of the air conditioner through another set of pipelines.

Further, as shown in FIG. 12 and FIG. 13, the first opening 121p and the second opening 121q are provided on an end part of the first housing body 121a that is used to mount the first hydraulic pump 110. The first opening 121p and the second opening 121q are spaced apart in a third direction D3 perpendicular to the first direction D1 and the second direction D2. The first motor housing 121 may further include a first liquid passage joint 126 and a second liquid passage joint 127. The first liquid passage joint 126 is mounted to the first opening 121p, and communicates with the first heat dissipation cavity 121t and the outside. The second liquid passage joint 127 is mounted to the second opening 121q, and communicates with the first heat dissipation cavity 121t and the outside. The first liquid passage joint 126 and the second liquid passage joint 127 are configured to connect to a pipeline. Correspondingly, as shown in FIG. 14 and FIG. 15, the third opening 221p and the fourth opening 221q are provided on an end part of the second housing body 221a that is configured to mount the second hydraulic pump 210. The third opening 221p and the fourth opening 221q are spaced apart in the third direction D3 perpendicular to the second direction D2 and the second direction D2. The second motor housing 221 further includes a third liquid passage joint 226 and a fourth liquid passage joint 227. The third liquid passage joint 226 is mounted to the third opening 221p, and communicates with the second heat dissipation cavity 221t and the outside. The fourth liquid passage joint 227 is mounted to the fourth opening 221q, and communicates with the second heat dissipation cavity 221t and the outside. The third liquid passage joint 226 and the fourth liquid passage joint 227 are configured to connect to a pipeline.

In another embodiment not shown, the first flow channel and the second flow channel are respectively located on two sides of the accommodating groove, and the first flow channel and the second flow channel are connected in series. For example, a flow-through groove is provided on a sidewall on the same side of the first motor housing and the second motor housing. The flow-through groove separately communicates with the first flow channel and the second flow channel. Specifically, a first flow-through groove is provided on a sidewall of the first motor housing that is close to the second motor housing. A second flow-through groove is provided on a sidewall of the second motor housing that is close to the first motor housing. The first flow-through groove communicates with the second flow-through groove to be spliced to form the flow-through groove. The hydraulic power supply apparatus 600 further includes a flow-through cover plate. The flow-through cover plate may be a part of the first motor housing and the second motor housing. The flow-through cover plate is connected, through sealing in a detachable configuration, to an opening of the flow-through groove to form a flow-through flow channel. The first flow channel communicates with the second flow channel through the flow-through flow channel.

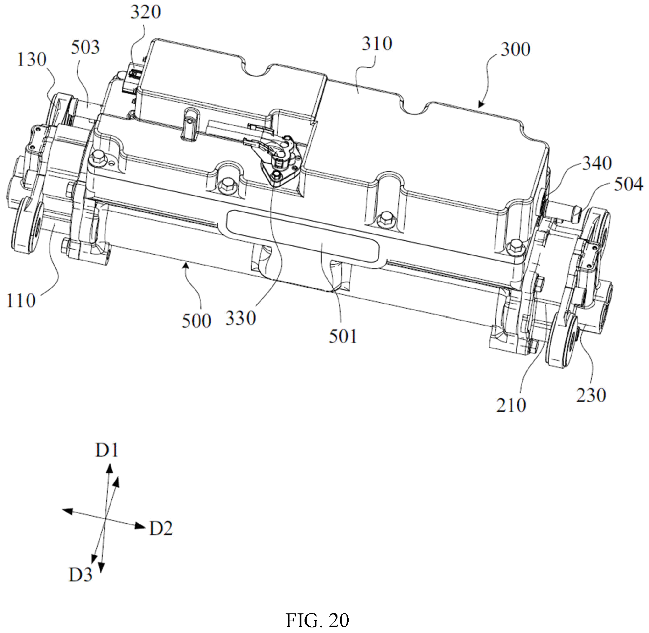

Referring to FIG. 20 to FIG. 25, in another embodiment of the present disclosure, the first motor housing and the second motor housing are formed into an integrated dual-motor housing, referred to as an integrated motor housing 500, by using an integrated molding manufacturing method. The integrated motor housing 500 is a common housing of the first motor 120 and the second motor 220. The common housing is a non-detachable housing. Compared with the first motor pump 100 and the second motor pump 200, same parts of the first motor pump and the second motor pump are not described herein again. The following description mainly focuses on differences.

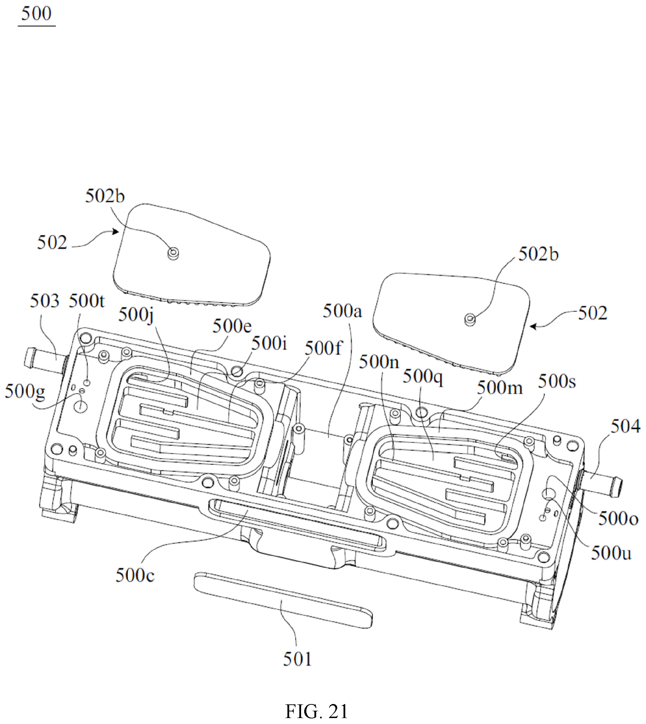

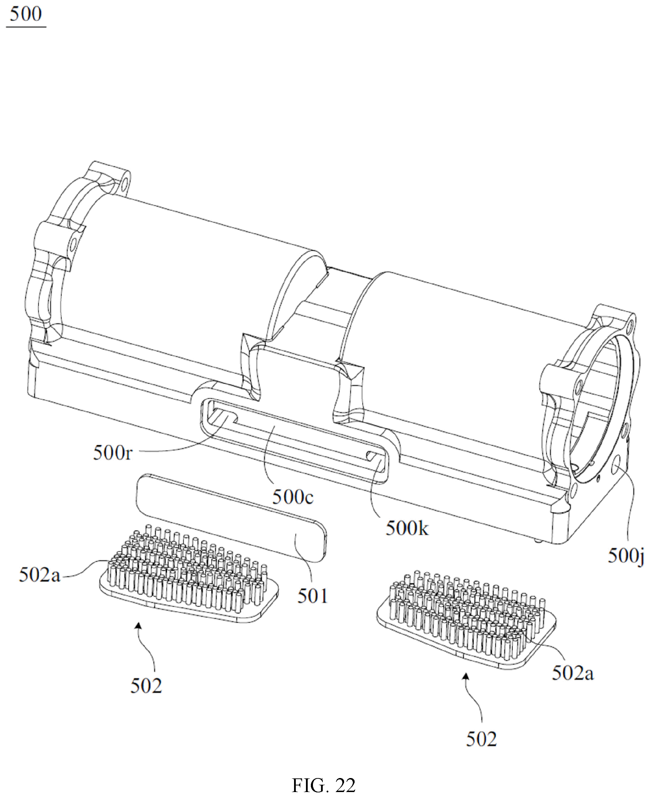

Referring to FIG. 21 and FIG. 22, for example, the integrated motor housing 500 is provided with a first liquid passage port 500j, a second liquid passage port 500k, a third liquid passage port 500r, and a fourth liquid passage port 500s. The first liquid passage port 500j and the fourth liquid passage port 500s are provided at two ends of the integrated motor housing 500. The second liquid passage port 500k and the third liquid passage port 500r are located between the first liquid passage port 500j and the fourth liquid passage port 500s. The second liquid passage port 500k and the first liquid passage port 500j are spaced apart in the third direction D3 perpendicular to the first direction D1 and the second direction D2. Both the first liquid passage port 500j and the second liquid passage port 500k communicate with a first mounting groove 500e. A first flow guide rib 500f is disposed in the first mounting groove 500e. A flow channel plate 502 is mounted in the first mounting groove 500e to form a first flow channel 500i. The fourth liquid passage port 500s and the third liquid passage port 500r are spaced apart in the third direction D3. Both the third liquid passage port 500r and the fourth liquid passage port 500s communicate with a second mounting groove 500m. A second flow guide rib 500n is disposed in the second mounting groove 500m. A flow channel plate 502 is mounted in the second mounting groove 500m to form a second flow channel 500q. The second liquid passage port 500k and the third liquid passage port 500r are located at the same end of the integrated motor housing 500 in the third direction D3. A flow-through groove 500c is provided on a surface of the integrated motor housing 500 that faces outward in the third direction D3. The flow-through groove 500c is provided close to the second liquid passage port 500k and the third liquid passage port 500r in the third direction D3. The flow-through groove 500c is located between the second liquid passage port 500k and the third liquid passage port 500r. The flow-through groove 500c extends in the second direction D2, and separately communicates with the second liquid passage port 500k and the third liquid passage port 500r. An opening of the flow-through groove 500c faces outward in the third direction D3. The integrated motor housing 500 may include a flow-through cover plate 501. The flow-through cover plate 501 covers the opening of the flow-through groove 500c, to close the opening of the flow-through groove 500c. The flow-through cover plate 501, the first housing body 121a, and the second housing body 221a form a flow-through flow channel. Therefore, the first flow channel 500i and the second flow channel 500q formed in the integrated motor housing are connected to each other in series through the flow-through flow channel.

Referring to FIG. 20 to FIG. 25, further, the integrated motor housing 500 may include a first liquid passage joint 503 and a second liquid passage joint 504. The first liquid passage joint 503 is mounted to the first liquid passage port 500j, and communicates with the first mounting groove 500e and the outside. The second liquid passage joint 504 is mounted to the fourth liquid passage port 500s, and communicates with the second mounting groove 500m and the outside. The first liquid passage joint 503 and the second liquid passage joint 504 may be connected to a heat exchange circuit of an air conditioner of a vehicle through a pipeline, to share a heat exchange medium with the air conditioner.

Referring to FIG. 21, FIG. 23, and FIG. 25, optionally, a positioning boss 502b may be disposed on a surface of the flow channel plate 502 that faces the motor controller 300. The positioning boss 502b is configured to abut against a drive circuit board 370, to position locations of the drive circuit board 370 and the flow channel plate 502 in the first direction D1. This helps prevent the drive circuit board 370 from moving relative to the flow channel plate 502 in the first direction D1 due to reasons such as vibration, thereby preventing the power component 371 from being damaged due to excessive force.

In some other embodiments not shown, the flow-through groove 500c may alternatively be provided at another part of the integrated motor housing 500. For example, the flow-through groove 500c is arranged on a side of the integrated motor housing 500 that faces the motor controller 300 in the first direction D1. In this case, a cover plate of the flow-through groove 500c may be integrated with the flow channel plate 502, or may be provided separately.

Referring to FIG. 21, FIG. 23, and FIG. 25, in addition, the integrated motor housing 500 is further provided with a first through-hole 500g and a third through-hole 500o that are configured to mount a detection assembly 140.

Referring to FIG. 1 to FIG. 34, for example, the first motor 120 may include a first lead-out wire 128. The first lead-out wire 128 is electrically connected to a first winding in the first motor 120 or is a part of the first winding. For example, the first winding may include a first winding body and a first lead-out wire. The first lead-out wire includes a root end and a tip end. The root end and the tip end herein will be understood as two end parts of the first lead-out wire in a length direction of the first lead-out wire. The root end of the first lead-out wire is mounted in a stator core of the first motor 120. The first lead-out wire serves as the first lead-out wire 128, or the tip end of the first lead-out wire is connected to the first lead-out wire. The second motor 220 may include a second lead-out wire 228. The second lead-out wire 228 is electrically connected to a second winding in the second motor 220 or is a part of the second winding. For example, the second winding may include a second winding body and a second lead-out wire. The second lead-out wire includes a root end and a tip end. The root end and the tip end herein will be understood as two end parts of the second lead-out wire in a length direction of the second lead-out wire. The root end of the second lead-out wire is mounted in a stator core of the second motor 220. The second lead-out wire serves as the second lead-out wire 228, or the tip end of the second lead-out wire is connected to the second lead-out wire. The hydraulic power supply apparatus 600 may further include a first electrical connection member 160 and a second electrical connection member 260. The first electrical connection member 160 and the second electrical connection member 260 each will be understood as an adapter copper busbar. The adapter copper busbar is suitable for being electrically connected to the motor controller 300. In other words, the first electrical connection member 160 is connected to the first lead-out wire 128 and the motor controller 300. The second electrical connection member 260 is connected to the second lead-out wire 228 and the motor controller 300. Electrical energy of a power supply is converted by using the motor controller 300 and is then separately supplied to the first motor 120 and the second motor 220, to control running states of the first motor 120 and the second motor 220.

It will be understood that the first electrical connection member 160 may be plugged into an electrical connection part between motor controllers 300. The first electrical connection member 160 may be connected to the first lead-out wire 128 by connection means such as plugging, welding, and connection through a fastener.

Referring to FIG. 2 to FIG. 10 and FIG. 12 to FIG. 19, the accommodating groove 400 is further formed between the first motor 120 and the second motor 220. The first lead-out wire 128, the second lead-out wire 228, the first electrical connection member 160, and the second electrical connection member 260 are at least partially located in the accommodating groove 400. Electrical elements or components such as the capacitor 375 of the motor controller 300 may also be accommodated in the accommodating groove. The accommodating groove is provided between the first motor 120 and the second motor 220 to accommodate a part of the first lead-out wire 128, a part of the second lead-out wire 228, the first electrical connection member 160, the second electrical connection member 260, and electrical elements or components such as the capacitor 375 of the motor controller 300, to improve utilization of space of the first motor 120 and the second motor 220 in the axial direction D2, help improve integration of the motor controller, and reduce space occupation in the first direction D1, thereby improving compactness of a structure in the first direction D1.

Referring to FIG. 6, FIG. 7, FIG. 16, and FIG. 17, for example, the first motor 120 and the second motor 220 each may be a three-phase motor. Correspondingly, the first motor 120 and the second motor 220 each have three phases of windings. The first lead-out wire 128 includes three phases of first lead-out wires 128. The second lead-out wire 228 includes three phases of second lead-out wires 228. The first electrical connection member 160 includes three phases of input parts and three phases of output parts. The three phases of input parts are connected to the motor controller 300. The three phases of output parts are connected to the three phases of windings of the first motor 120. A structure of the second electrical connection member 260 may be the same as that of the first electrical connection member 160.

Referring to FIG. 6, FIG. 7, FIG. 16, and FIG. 17, further, the first motor 120 includes three phases of first windings and three phases of first lead-out wires 128. The first electrical connection member 160 includes three phases of first electrical connection terminals 161, and the phases of first lead-out wires 128 are connected to the phases of first windings and the phases of first electrical connection terminals 161 in one-to-one correspondence. Correspondingly, the second motor 220 includes three phases of second windings and three phases of second lead-out wires 228. The second electrical connection member 260 includes three phases of second electrical terminals, and the phases of second lead-out wires 228 are connected to the phases of second windings and the phases of second electrical terminals in one-to-one correspondence.

Further, referring to FIG. 6, FIG. 8, FIG. 10, FIG. 16, FIG. 18, and FIG. 19, the first electrical connection member 160 may be configured as a first adapter copper busbar. The first electrical connection terminal 161 and a second electrical connection terminal 169 may be configured as structures formed by using copper. First electrical connection terminals 161 and second electrical connection terminals 169 that are of the same phase or that are electrically connected to the same winding may be configured as an integrated part. The second electrical connection terminal 169 may be connected to the motor controller 300 in an electrical connection means of plugging. Correspondingly, referring to FIG. 7, FIG. 8, FIG. 10, FIG. 17, FIG. 18, and FIG. 19, the second electrical connection member 260 may be configured as a second adapter copper busbar. The second electrical terminal and a fifth electrical terminal may be configured as structures formed by using copper. Second electrical terminals and fifth electrical terminals that are of the same phase or that are electrically connected to the same winding may be configured as an integrated part. The fifth electrical terminal may be connected to the motor controller 300 in an electrical connection means of plugging.

The first motor 120 may include a first winding (not shown). The first winding is at least in indirect abutment, plugging, or clamping with the first electrical connection member. This will be understood as follows: When the first lead-out wire 128 belongs to a part of a first lead-out wire of the first winding, the first winding is in direct abutment, plugging, or clamping with the first electrical connection member 160. When the first lead-out wire 128 does not belong to the first winding but is connected to the first lead-out wire of the first winding, the first winding is in indirect abutment, plugging, or clamping with the first electrical connection member 160 through the first lead-out wire 128. A means of connecting the second electrical connection member 260 and the second motor 220 is similar to the foregoing.

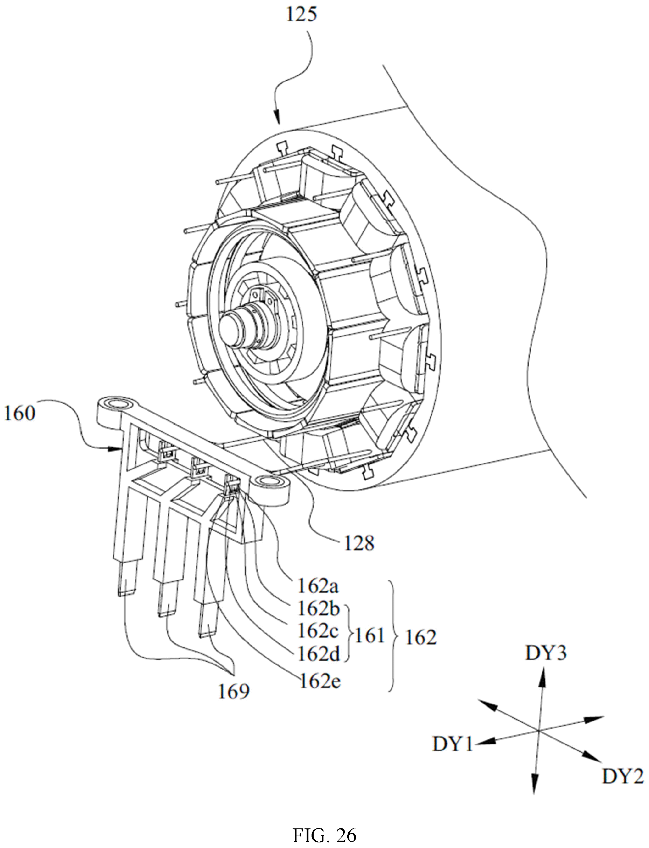

The following describes in detail the first electrical connection member 160 or the second electrical connection member 260 in the present disclosure with reference to examples shown in FIG. 26 to FIG. 34.

FIG. 26 to FIG. 28 show an example of the first electrical connection member 160. A structure of the first electrical connection member 160 is the same as that of the second electrical connection member 260. The first electrical connection member 160 is now used as an example for description. The first electrical connection terminal 161 of the first electrical connection member 160 has a bossed package. After the first motor body 125 is assembled, an inner conductor of the first lead-out wire 128 presses against and is conductively connected to the bossed package. Because both sides of the bossed package are arcs, the first lead-out wire 128 can be guided through surfaces of the arcs when the first lead-out wire 128 is assembled, which helps the first lead-out wire 128 to abut against a more protruding part of the bossed package. When the inner conductor of the first lead-out wire 128 abuts against the more protruding part of the bossed package, abutment forces between the first electrical connection terminal 161 and the first lead-out wire 128 are greater, so that the first electrical connection terminal 161 and the first lead-out wire 128 are reliably conductively connected. Because the inner conductor of the first lead-out wire 128 is in contact with the surfaces of the arcs of the bossed package, and a contact area is relatively small, this first electrical connection may be applied to a motor with a relatively small rated current.

Still referring to FIG. 26 to FIG. 28, a protrusion 162 is configured at the first electrical connection terminal 161 according to an embodiment of the present disclosure. The protrusion 162 herein may be referred to as a bossed package. One end of the first lead-out wire 128 is electrically connected to a first winding of the first motor 120 or is a part of the first winding. The other end of the first lead-out wire 128 extends in a first extension direction DY1, and abuts against and is conductively connected to the protrusion 162 in a second extension direction DY2. The first extension direction DY1 herein may be parallel to or almost parallel to the first direction D1. That the first extension direction DY1 is almost parallel to the first direction D1 will be understood as follows: An angle between the first extension direction DY1 and the first direction D1 is within a range from 0° to 15°. The second extension direction DY2 intersects the first extension direction DY1.

Referring to FIG. 26 to FIG. 28, for example, the first electrical connection member 160 may include the first electrical connection terminal 161. The first electrical connection member 160 is suitable for being electrically connected to the motor controller 300. One end of the first winding abuts against or is welded to the first electrical connection terminal 161. The first winding abuts against or is welded to the first electrical connection terminal 161 of the electrical connection member, so that an electrical connection structure between the first winding and the first electrical connection member 160 can be simplified, thereby reducing processing costs and improving assembly efficiency.

With continued reference to FIG. 26 to FIG. 28, for example, the first motor 120 may include a first stator core. The first winding may include a first winding body (not shown) and a first lead-out wire 128. The first winding body is fixedly connected to the first stator core. A first end of the first lead-out wire 128 is connected to the first winding body. A second end of the first lead-out wire 128 abuts against the first electrical connection terminal 161. The first winding body and the first lead-out wire 128 may be an integrated part, or the first winding body and the first lead-out wire 128 may be two different conducting wires. The first lead-out wire 128 of the first winding body abuts against the first electrical connection terminal 161 to connect the first winding body and the first electrical connection terminal 161, so that a connection means is simpler and is convenient for operation.

With continued reference to FIG. 26 to FIG. 28, further, the first electrical connection terminal 161 may include the protrusion 162. A side surface of the first lead-out wire 128 abuts against the protrusion 162, and the first lead-out wire 128 is inclined to an axial direction D2 of the first motor 120. If the first end of the first lead-out wire 128 is fastened relative to the stator or the first motor housing 121, and the first lead-out wire is parallel to or approximately parallel to the axial direction D2 of the first motor 120 in an initial state in which the first lead-out wire is not connected to the protrusion 162, force is applied at the second end of the first lead-out wire 128, so that the first lead-out wire 128 abuts against the protrusion 162, and finally, the first lead-out wire 128 is inclined to the axial direction D2 of the first motor 120. In this case, the first lead-out wire 128 abuts against the protrusion 162 through elastic force generated after elastic deformation, so that a connection between the first lead-out wire 128 and the protrusion 162 is more reliable.

With continued reference to FIG. 26 to FIG. 28, optionally, the first winding body and the first lead-out wire 128 are two different conducting wires. Hardness of the first lead-out wire 128 is greater than hardness of the first winding body. The first end of the first lead-out wire 128 is at least indirectly fastened to the first stator core. The first electrical connection terminal 161 includes the protrusion. The first lead-out wire 128 abuts against the protrusion 162. In a plane perpendicular to the axial direction D2 of the first motor 120, a projection of the protrusion 162 partially overlaps a projection of the first lead-out wire 128. Herein, the first lead-out wire 128 is elastically deformed and then abuts against the protrusion 162, to implement a reliable connection between the first lead-out wire 128 and the protrusion 162, which is more convenient and reliable.

It will be understood that, when being in a natural state, the first lead-out wire 128 may not be a conducting wire extending in a straight line, for example, the first lead-out wire 128 is a conducting wire extending in a curved line. A conducting wire of a curved shape may be that when one end is fastened, the other end can be deformed due to applied force to abut against the protrusion, thereby achieving reliable abutment, which also falls within the scope of the present disclosure.

In another embodiment, when the first lead-out wire overlaps the protrusion 162, there may be no interaction force between the first lead-out wire and the protrusion 162. In this case, the first lead-out wire can reliably abut against or be connected to the protrusion through another structure or a process means such as welding.

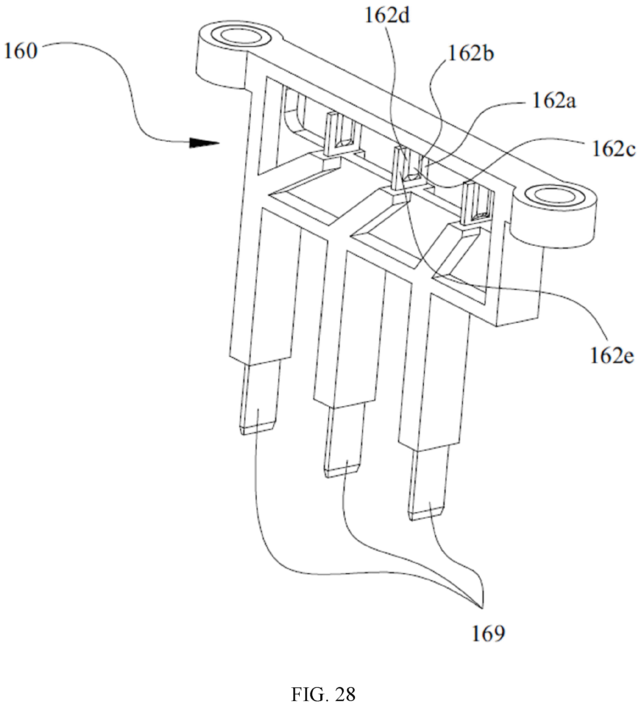

In examples shown in FIG. 26 and FIG. 28, the protrusion is arc-shaped. The first lead-out wire 128 abuts against the protrusion at a vertex of the protrusion. In this way, a contact area between the first lead-out wire 128 and the protrusion is relatively small, which may be adapted to an application scenario in which a current is relatively small.

For example, the first electrical connection terminal 161 may include a plate body (not marked). The protrusion is configured as a part of the plate body protruding toward one side (as shown in FIG. 26 to FIG. 28), or the protrusion is disposed on a side surface of the plate body. Herein, a manufacturing method may be flexibly selected based on an actual requirement, to process and manufacture a protruded part.

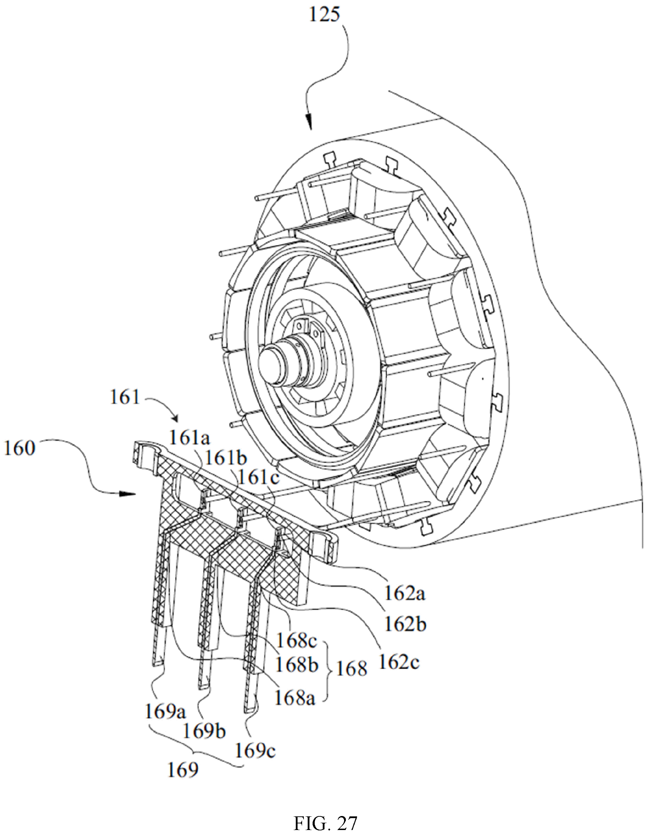

Referring to FIG. 26 and FIG. 27, optionally, the first motor 120 includes three phases of first lead-out wires 128. The first electrical connection member 160 includes three phases of first electrical connection terminals 161. The phases of first lead-out wires 128 are connected to the phases of first electrical connection terminals 161 in one-to-one correspondence. The first electrical connection member 160 is configured as an adapter copper busbar.

Referring to FIG. 26 to FIG. 28, in addition, the first electrical connection member 160 may further include the second electrical connection terminal 169. The second electrical connection terminal 169 is suitable for being connected to the motor controller 300. Optionally, a connecting plate 168 is further disposed between the second electrical connection terminal 169 and the first electrical connection terminal 161. An angle between the connecting plate and the second electrical connection terminal 169 is greater than 90° and less than 180°. In this way, a distance between the second electrical connection terminal and the first electrical connection terminal may be increased.

With continued reference to FIG. 26 to FIG. 28, for example, three sequentially disposed connecting plates 168 are respectively denoted as a first connecting plate 168a, a second connecting plate 168b, and a third connecting plate 168c. First electrical connection terminals 161 respectively connected to the first connecting plate 168a, the second connecting plate 168b, and the third connecting plate 168c are respectively denoted as a first electrical terminal 161a, a second electrical terminal 161b, and a third electrical terminal 161c. Second electrical connection terminals respectively connected to the first connecting plate 168a, the second connecting plate 168b, and the third connecting plate 168c are respectively denoted as a fourth electrical terminal 161a, a fifth electrical terminal 161b, and a sixth electrical terminal 161c. The first connecting plate 168a is inclined toward a direction away from the first electrical terminal 161a and the second electrical terminal 161b. Inclined directions of the second connecting plate 168b and the third connecting plate 168c are the same as the inclined direction of the first connecting plate 168a. An angle between the first connecting plate 168a and the fourth electrical terminal 161a is α1, an angle between the second connecting plate 168b and the fifth electrical terminal 161b is α2, and an angle between the third connecting plate 168c and the sixth electrical terminal 161c is α3, where α1<α2<α3. In such an arrangement, a distance between the three first electrical connection terminals 161 can be reduced while a safe distance between the three second electrical connection terminals 169 is ensured, thereby facilitating the arrangement of the three phases of first lead-out wires 128.

Optionally, the first winding includes a first winding body and a first lead-out wire 128. A first end of the first lead-out wire 128 is connected to the first winding body. The first electrical connection member includes the first electrical connection terminal. The first electrical connection terminal includes a protrusion. The first lead-out wire 128 is welded to the protrusion 162. After the protrusion 162 is arranged, the first lead-out wire 128 and the first electrical connection terminal 161 are welded after being positioned. This arrangement not only ensures reliability of a connection between the lead-out wire and the first electrical connection terminal 161, but also facilitates implementation of a welding process.

Referring to FIG. 26 and FIG. 27, further, the first electrical connection terminal 161 extends in a third extension direction DY3. The third extension direction DY3 intersects the first extension direction DY1 and the second extension direction DY2.

Referring to FIG. 26 to FIG. 28, for example, in a plane perpendicular to the third extension direction DY3 and intersecting the protrusion 162, the first electrical connection terminal 161 may include a first clearance part 162a, a first guide part 162b, and an abutment part 162c that are sequentially connected in the first extension direction DY1. The first clearance part 162a is spaced apart from the abutment part 162c in the first extension direction DY1. The first clearance part 162a is closer to the first winding than the abutment part 162c in the first extension direction DY1. The first clearance part 162a is spaced apart from the abutment part 162c in the second extension direction DY2. The protrusion 162 includes the first guide part 162b and the abutment part 162c. In a state in which the first electrical connection member 160 is moved in the first extension direction DY1 to a location at which the first electrical connection member 160 is detached from the first lead-out wire 128, in a plane perpendicular to the first extension direction DY1, an end part of the first lead-out wire 128 that is away from the winding of the first motor 120 is located between the first clearance part 162a and the abutment part 162c in the second extension direction DY2, and the end part of the first lead-out wire 128 that is away from the winding of the first motor 120 is separately spaced apart from the first clearance part 162a and the abutment part 162c in the second extension direction DY2. When the first electrical connection member 160 approaches the first lead-out wire 128 in the first extension direction DY1 or the first lead-out wire 128 approaches the first electrical connection member 160 in the first extension direction DY1, because the end part of the first lead-out wire 128 is staggered from the first clearance part 162a in the second extension direction DY2, the end part of the first lead-out wire 128 first abuts against the first guide part 162b, and then, under guidance of the first guide part 162b, the end part of the first lead-out wire 128 gradually moves toward the abutment part 162c, until the end part of the first lead-out wire 128 moves to a location at which the end part of the first lead-out wire 128 completely abuts against the abutment part 162c. In a process in which the end part of the first lead-out wire 128 moves from the first guide part 162b to the abutment part 162c, extrusion force between the first electrical connection terminal 161 and the first lead-out wire 128 in the second extension direction DY2 gradually becomes strong, to ensure that the first lead-out wire 128 can reliably abut against the abutment part 162c, thereby preventing poor contact.

It will be understood that a cross-sectional shape of the first guide part 162b herein may be a straight line, may be a curved line, or may be a shape with a combination of a straight line and a curved line. In addition, a junction between the first guide part 162b and the first clearance part 162a, and a junction between the first guide part 162b and the abutment part 162c may be in a smooth transition form, to ensure that the end part of the first lead-out wire 128 can smoothly slide from the first guide part 162b to the abutment part 162c.

Referring to FIG. 26 to FIG. 28, further, in the plane perpendicular to the third extension direction DY3 and intersecting the protrusion 162, the first electrical connection terminal 161 may further include a second guide part 162d and a second clearance part 162e that are sequentially connected in the first extension direction DY1. The second guide part 162d and the second clearance part 162e are located on a side of the abutment part 162c that is away from the first guide part 162b in the first extension direction DY1. The second guide part 162d is connected to the abutment part 162c. The second clearance part 162e and the first clearance part 162a are located on the same side of the abutment part 162c in the second extension direction DY2, and the second clearance part 162e is spaced apart from the abutment part 162c in the second extension direction DY2. The protrusion 162 further includes the second guide part 162d. Therefore, in the example in which the first electrical connection terminal 161 has the second guide part 162d and the second clearance part 162e, a cross-sectional shape of the first electrical connection terminal 161 is close to a "Ω" shape or a Chinese character " 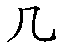 " shape. Herein, the "Ω" shape or the Chinese character " 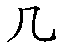 " shape is only a shape that is approximately similar to the cross-sectional shape of the first electrical connection terminal 161 when being viewed from an overall contour shape, and is not a limitation on the cross-sectional shape of the first electrical connection terminal 161. After the second guide part 162d and the second clearance part 162e are added, the first electrical connection terminal 161 can have two additional bending structures, which helps improve structural strength of the first electrical connection terminal 161, so that the first electrical connection terminal 161 is not prone to deformation and failure when the first lead-out wire 128 abuts against the first electrical connection terminal 161 in the second extension direction DY2.

It will be understood that a cross-sectional shape of the second guide part 162d herein may be a straight line, may be a curved line, or may be a shape with a combination of a straight line and a curved line. In addition, a junction between the second guide part 162d and the second clearance part 162e, and a junction between the second guide part 162d and the abutment part 162c may be in a smooth transition form. The second guide part 162d and the second clearance part 162e herein may not be in contact with a lead-out wire, and the second guide part 162d may not guide movement of the first lead-out wire 128 in an assembly process. Certainly, in some cases, if a lead-out wire can be assembled in two opposite directions of the first electrical connection terminal 161 in the first extension direction DY1, for example, when the lead-out wire simultaneously shares an electrical connection terminal with lead-out wires of the two motors, a function of the second guide part 162d is the same as that of the first guide part 162b, and a function of the second clearance part 162e is the same as that of the first clearance part 162a.

In some other embodiments, the second guide part 162d and the second clearance part 162e may not be provided. Optionally, the abutment part 162c extends in the first extension direction DY1 in a direction away from the first clearance part 162a. This helps increase a conductive contact area between the abutment part 162c and the first lead-out wire 128.

Optionally, the first lead-out wire 128 is spaced apart from the first clearance part 162a in the second extension direction DY2. When the first lead-out wire 128 is connected to the first electrical connection terminal 161, the first lead-out wire 128 is spaced apart from the first clearance part 162a, to ensure that abutment force between the first lead-out wire 128 and the abutment part 162c is greater in the second direction D2.

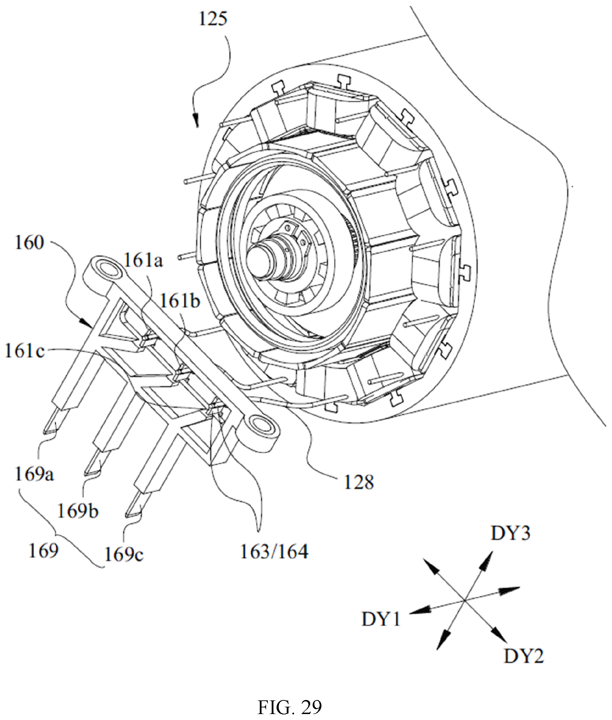

FIG. 29 to FIG. 32 show another example of the first electrical connection member 160 or the second electrical connection member 260. A structure of the first electrical connection member 160 is the same as that of the second electrical connection member 260. The first electrical connection member 160 is now used as an example for description. The first electrical connection terminal 161 of the first electrical connection member 160 includes an arc structure configured to assemble a conical cylinder 163. A center of the arc structure may be collinear with an end part of an inner conductor of the first lead-out wire 128. For ease of assembling the first lead-out wire 128 to the conical cylinder 163, an end of the conical cylinder 163 that faces the first motor 120 is configured as a guide port. The guide port is in a shape of a horn port, that is, an inner diameter of the guide port gradually decreases in a direction away from the first motor 120. A maximum inner diameter of the guide port is larger than an outer diameter of the conductor of the first lead-out wire 128. To ensure good contact between the first lead-out wire 128 and the conical cylinder 163 after assembly, an inner diameter of an end of the conical cylinder 163 that is away from the guide port is smaller than the outer diameter of the conductor of the first lead-out wire 128. In addition, an opening structure is disposed at the end of the conical cylinder 163 that is away from the guide port. When the first lead-out wire 128 is assembled to the end with a smaller inner diameter of the conical cylinder 163, the opening structure expands due to reception of radial extrusion forces. In this way, it is convenient for the first lead-out wire 128 to pass through the conical cylinder 163, to increase a contact area between the first lead-out wire 128 and the conical cylinder 163. In addition, stability of a connection structure between the conical cylinder 163 and the first lead-out wire 128 can be further improved. To be specific, after the first lead-out wire 128 is mounted in the conical cylinder 163, the first lead-out wire 128 is surrounded by a circumference of the conical cylinder 163, to achieve good limiting and obtain a large contact area, which facilitates application of the first lead-out wire 128 to a motor that needs to transmit a relatively large current.

Referring to FIG. 29 to FIG. 32, the first electrical connection terminal 161 according to the present disclosure may include a connecting hole 163a extending in a first extension direction DY1, and the connecting hole 163a has a first end 163b and a second end 163c that face opposite directions in the first extension direction DY1. The first end 163b is closer to a first cavity than the second end 163c in the first extension direction DY1, that is, closer to the first winding. An aperture of the second end 163c is less than or equal to the outer diameter of the conductor of the first lead-out wire 128. In this way, it is ensured that the conductor of the first lead-out wire 128 can be in conductive contact with the first electrical connection terminal 161 when passing through the connecting hole 163a. An aperture of the first end 163b is greater than the outer diameter of the conductor of the first lead-out wire 128. This helps the conductor of the first lead-out wire 128 to enter the connecting hole 163a from the first end 163b. The first end 163b can guide plugging of the conductor of the first lead-out wire 128, and may also be referred to as a guide port. The conductor of the first lead-out wire 128 extends through the connecting hole 163a and is conductively connected to the first electrical connection terminal 161.

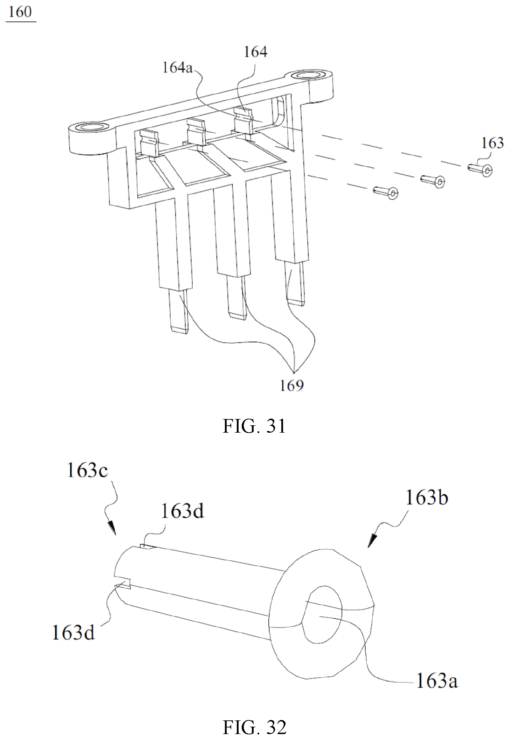

Referring to FIG. 32, for example, the aperture of the second end 163c is less than the outer diameter of the conductor of the first lead-out wire 128. The first electrical connection terminal 161 may include a connecting cylinder extending in the first extension direction DY1. The connecting hole 163a runs through the connecting cylinder in the first extension direction DY1. A trench 163d is provided at a part of the connecting cylinder that corresponds to the second end 163c. The trench 163d may also be referred to as an opening structure, a fracture opening, or a fracture mark. The trench 163d extends to an end part of the second end 163c of the connecting cylinder in an axial direction of the connecting cylinder or in a depth direction of the connecting hole 163a. The trench 163d communicates with the connecting hole 163a and the outside in a radial direction. The trench 163d runs through in the first extension direction DY1 to reach an end part of the connecting cylinder that is away from the first end 163b. The trench 163d is configured to be adaptively opened when the conductor of the first lead-out wire 128 reaches the second end 163c through extension and is subjected to extrusion forces in the radial direction of the connecting cylinder. It will be understood that, in a process in which the trench 163d is subjected to force and opened, a part of the connecting cylinder between adjacent trenches 163d expands and deforms outward in the radial direction, and applies extrusive preload force to the conductor of the first lead-out wire 128.

Referring to FIG. 32, further, the connecting cylinder is provided with at least two trenches 163d. The trenches 163d are spaced apart in a circumferential direction of the connecting cylinder. A plurality of trenches 163d are disposed to help improve balance of force distribution between the connecting cylinder and the first lead-out wire 128.

Referring to FIG. 29 and FIG. 32, optionally, the at least two trenches 163d are arranged at equal intervals in the circumferential direction of the connecting cylinder.

In an example shown in FIG. 32, the connecting cylinder is provided with three trenches 163d.

Optionally, the connecting cylinder may be configured as a metal cylinder that can produce elastic deformation. This may increase force between the connecting cylinder and the first lead-out wire 128 in the radial direction, so that the connecting cylinder and the first lead-out wire 128 are more reliably connected. In addition, this helps prevent a conductive failure, thereby prolonging a service life.

Preferably, the first electrical connection terminal 161 is configured as a structure formed by using copper.

Referring to FIG. 29 to FIG. 32, in addition, the first electrical connection member 160 may further include a base 164. The base 164 is configured with a connecting groove 164a. The connecting groove 164a is adapted to accommodate a part of the connecting cylinder. The connecting cylinder is fixedly connected to the base 164. The base 164 supports and fastens the connecting cylinder. The connecting cylinder and the base 164 may be separately manufactured from each other, and then are assembled together. The base 164 is provided with the connecting groove 164a, so that it is convenient to position a connection location of the connecting cylinder on the base 164.

For example, a shape of the connecting groove 164a may be adapted to a shape of the connecting cylinder.

Optionally, both the base 164 and the connecting cylinder may be manufactured by using copper.

Optionally, the connecting cylinder may be fastened to the base 164 by means of welding.

Referring to FIG. 29 to FIG. 32 and with reference to FIG. 27, in addition, the first electrical connection member 160 may further include the second electrical connection terminal 169. The second electrical connection terminal 169 is suitable for being connected to the motor controller 300. Optionally, a connecting plate 168 is further disposed between the second electrical connection terminal 169 and the first electrical connection terminal 161. An angle between the connecting plate and the second electrical connection terminal 169 is greater than 90° and less than 180°. In this way, a distance between the second electrical connection terminal and the first electrical connection terminal may be increased.

With continued reference to FIG. 29 to FIG. 32 and with reference to FIG. 27, for example, three sequentially disposed connecting plates 168 are respectively denoted as a first connecting plate 168a, a second connecting plate 168b, and a third connecting plate 168c. First electrical connection terminals 161 respectively connected to the first connecting plate 168a, the second connecting plate 168b, and the third connecting plate 168c are respectively denoted as a first electrical terminal 161a, a second electrical terminal 161b, and a third electrical terminal 161c. Second electrical connection terminals respectively connected to the first connecting plate 168a, the second connecting plate 168b, and the third connecting plate 168c are respectively denoted as a fourth electrical terminal 161a, a fifth electrical terminal 161b, and a sixth electrical terminal 161c. The first connecting plate 168a is inclined toward a direction away from the first electrical terminal 161a and the second electrical terminal 161b. Inclined directions of the second connecting plate 168b and the third connecting plate 168c are the same as the inclined direction of the first connecting plate 168a. An angle between the first connecting plate 168a and the fourth electrical terminal 161a is α1, an angle between the second connecting plate 168b and the fifth electrical terminal 161b is α2, and an angle between the third connecting plate 168c and the sixth electrical terminal 161c is α3, where α1<α2<α3. In such arrangement, a distance between the three first electrical connection terminals 161 can be reduced while a safe distance between the three second electrical connection terminals 169 is ensured, thereby facilitating the arrangement of the three phases of first lead-out wires 128.

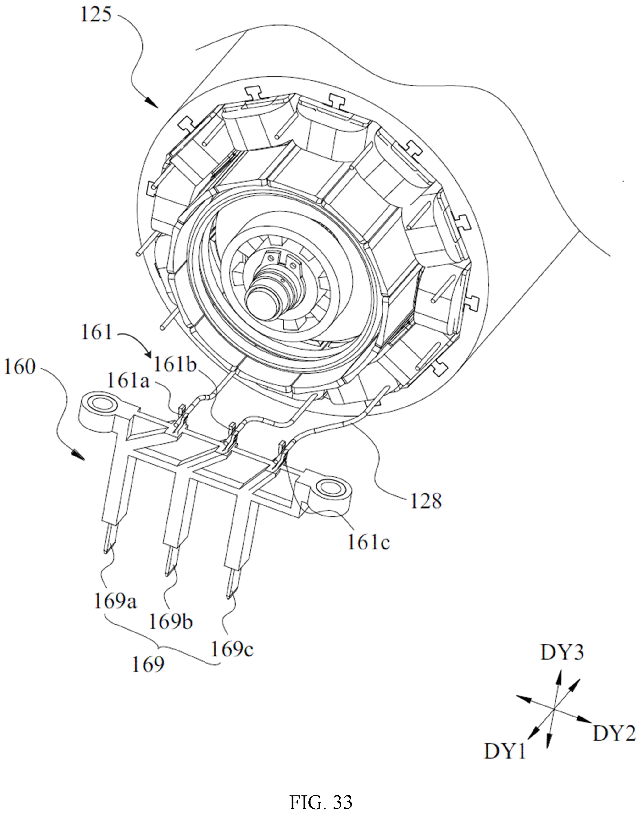

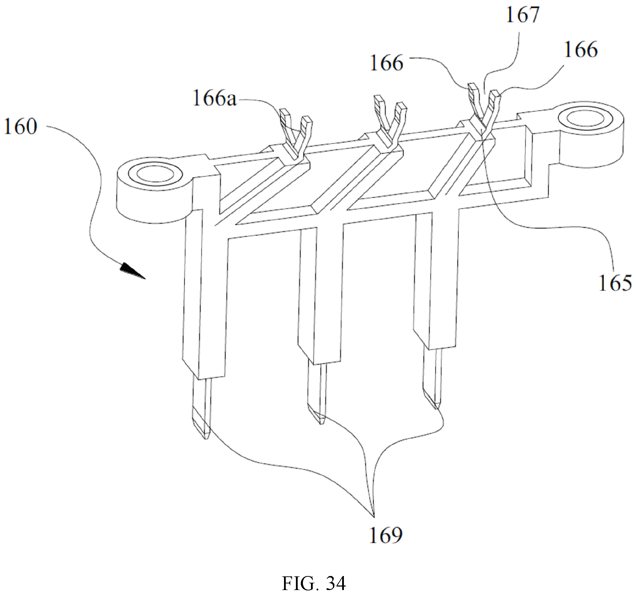

FIG. 33 and FIG. 34 show still another example of the first electrical connection member 160 or the second electrical connection member 260. A structure of the first electrical connection member 160 is the same as that of the second electrical connection member 260. The first electrical connection member 160 is now used as an example for description. The first electrical connection terminal 161 of the first electrical connection member 160 is segmented into two small copper busbars, and a shape formed by combining two small copper busbars is similar to a "Y"-shaped structure. A clamping port is formed on an end part of the first electrical connection terminal 161, which facilitates assembly with the first lead-out wire 128. In addition, the two small copper busbars each have an arc structure, and a center of the arc structure may be arranged concentric with an end part of the first lead-out wire 128. In this way, the first lead-out wire 128 can be in good contact with the copper busbars when being assembled to arc structure. Further, a diameter of the arc structure is slightly smaller than an outer diameter of a conductor of the first lead-out wire 128, so that contact between the arc structure and the first lead-out wire 128 is stronger. A form of contact between the arc structure and the conductor of the first lead-out wire 128 may be contact between arc surfaces. In this way, a contact area is increased, thereby helping transmit a relatively large current. In addition, a semi-arc surface has a specific limiting effect on a three-phase wire of a motor.

Referring to FIG. 33 and FIG. 34, according to this embodiment, the first electrical connection terminal 161 may include a base 165 and at least two clamping parts 166 sequentially arranged in the first extension direction DY1. Each clamping part 166 is connected to the base 165. In a plane perpendicular to a first extension direction DY1, ends that are of the clamping parts 166 and that are away from the base 165 are spaced apart from each other in the second extension direction DY2 to form a clamping port 167. One end of the first lead-out wire 128 is electrically connected to a first winding of the first motor 120. The other end of the first lead-out wire 128 extends in the first direction D1 and is clamped into the clamping port 167. In addition, the first lead-out wire 128 is conductively connected to the clamping part 166. In other words, the first electrical connection terminal 161 is electrically connected to the conductor of the first lead-out wire 128. A second extension direction DY2 intersects the first extension direction DY1. The first extension direction DY1 herein may be parallel to or almost parallel to the first direction D1. That the first extension direction DY1 is almost parallel to the first direction D1 will be understood as follows: an angle between the first extension direction DY1 and the first direction D1 is within a range from 0° to 15°.

In a mounting process, the first lead-out wire 128 may be first inserted into the clamping port 167 in the first extension direction DY1, or the first lead-out wire 128 may be placed into the clamping port 167 in the third direction D3, or an end part of the first lead-out wire 128 may be placed in the clamping port 167 in another direction or another moving track. Then, if the clamping port 167 is not sufficient to tightly clamp the first lead-out wire 128, the clamping part 166 may be bent in a manual process or an automated mechanical process to more attach to the first lead-out wire 128. If the clamping port 167 can be tightly clamped with the first lead-out wire 128 for fitting, the clamping port 167 may be directly used to tightly clamp the first lead-out wire 128.

For example, in the plane perpendicular to the first extension direction DY1, ends that are of the clamping parts 166 and that are close to the base 165 overlap. It will be understood that an extension direction of a part of the clamping parts 166 intersects an extension direction of the other part of the clamping parts 166. In the plane perpendicular to the first extension direction DY1, a contour shape of each clamping part 166 and the base 165 is close to a "Y" shape.

Further, the first electrical connection terminal 161 extends in a third extension direction DY3. The base 165 is located on an end part of the first electrical connection terminal 161 in the third extension direction DY3. The third extension direction DY3 intersects the first extension direction DY1 and the second extension direction DY2.

In the illustrated example, the first electrical connection terminal 161 may include two clamping parts 166. Extension directions of the two clamping parts 166 intersect each other. Using two clamping parts 166 provides a simple structure and is ease of manufacture, thereby reducing space and further reducing costs.

Specifically, the first electrical connection terminal 161 is formed by using a metal sheet. A manufacturing process may be as follows: One end of a metal sheet is split into two parts of local metal sheets arranged side by side in a width direction, and a splitting slot extends in a length direction of the metal sheet and runs through only one end of the metal sheet. Then, the two parts of separated local metal sheets are bent in opposite directions in a thickness direction of the metal sheet, to form the first electrical connection terminal 161. The metal sheet herein is preferably a copper sheet.

It will be understood that in another example not shown in the present disclosure, the first electrical connection terminal 161 may include three or more clamping parts 166.

For example, a surface of the clamping part 166 that faces the clamping port 167 is recessed to form a positioning groove 166a. The positioning groove 166a is configured to accommodate a part of the conductor of the first lead-out wire 128 to restrict the first lead-out wire 128 from exiting the clamping port 167.

In an example shown in FIG. 34, the positioning groove 166a is configured as an arc-shaped groove. This facilitates adaptation and attachment with the conductor of the first lead-out wire 128, thereby increasing a contact area.

Further, the first electrical connection terminal 161 may include two clamping parts 166. A gap between positioning grooves 166a of the two clamping parts 166 in the second extension direction DY2 is less than or equal to the outer diameter of the conductor of the first lead-out wire 128. Therefore, when the conductor of the first lead-out wire 128 is placed at the clamping port 167, the conductor of the first lead-out wire 128 can be in surface contact with an inner surface of the positioning groove 166a. In particular, when the gap between the positioning grooves 166a of the two clamping parts 166 in the second extension direction DY2 is less than the outer diameter of the conductor of the first lead-out wire 128, the two clamping parts 166 can further apply clamping force to the conductor of the first lead-out wire 128, so that a conductive connection between the first electrical connection terminal 161 and the conductor of the first lead-out wire 128 is more reliable and stable.

Referring to FIG. 33 to FIG. 34 and with reference to FIG. 27, in addition, the first electrical connection member 160 may further include the second electrical connection terminal 169. The second electrical connection terminal 169 is suitable for being connected to the motor controller 300. Optionally, a connecting plate 168 is further disposed between the second electrical connection terminal 169 and the first electrical connection terminal 161. An angle between the connecting plate and the second electrical connection terminal 169 is greater than 90° and less than 180°. In this way, a distance between the second electrical connection terminal and the first electrical connection terminal may be increased.

With continued reference to FIG. 33 and FIG. 34 and with reference to FIG. 27, for example, three sequentially disposed connecting plates 168 are respectively denoted as a first connecting plate 168a, a second connecting plate 168b, and a third connecting plate 168c. First electrical connection terminals 161 respectively connected to the first connecting plate 168a, the second connecting plate 168b, and the third connecting plate 168c are respectively denoted as a first electrical terminal 161a, a second electrical terminal 161b, and a third electrical terminal 161c. Second electrical connection terminals respectively connected to the first connecting plate 168a, the second connecting plate 168b, and the third connecting plate 168c are respectively denoted as a fourth electrical terminal 161a, a fifth electrical terminal 161b, and a sixth electrical terminal 161c. The first connecting plate 168a is inclined toward a direction away from the first electrical terminal 161a and the second electrical terminal 161b. Inclined directions of the second connecting plate 168b and the third connecting plate 168c are the same as the inclined direction of the first connecting plate 168a. An angle between the first connecting plate 168a and the fourth electrical terminal 161a is α1, an angle between the second connecting plate 168b and the fifth electrical terminal 161b is α2, and an angle between the third connecting plate 168c and the sixth electrical terminal 161c is α3, where α1<α2<α3. In such an arrangement, a distance between the three first electrical connection terminals 161 can be reduced while a safe distance between the three second electrical connection terminals 169 is ensured, thereby facilitating the arrangement of the three phases of first lead-out wires 128.

Structures of the first electrical connection terminal 161 in the foregoing three embodiments may be implemented in any combination. Certainly, within a scope foreseeable by a person skilled in the art, the foregoing three embodiments may be modified properly without creative efforts.

Referring to FIG. 1 to FIG. 23, in addition, the motor controller 300 may further include an electrical control housing 310, a control circuit board 360, a drive circuit board 370, and a bus electrical terminal 330. The drive circuit board 370 and the control circuit board 360 are located inside the electrical control housing 310. The drive circuit board 370 is closer to the first motor 120 and the second motor 220 than the control circuit board 360. The drive circuit board 370 is electrically connected to the control circuit board 360, the bus electrical terminal 330, the first lead-out wire 128, and the second lead-out wire 228. The bus electrical terminal 330 is at least partially exposed outside the electrical control housing 310, to electrically connect to a power supply of a vehicle through an electrical connector or a cable. In a state in which the bus electrical terminal 330 is connected to the power supply of the vehicle, electrical energy is provided to the drive board through the bus point terminal, and the drive circuit board 370 converts the electrical energy under control of the control circuit board 360, and then provides converted electrical energy to the first motor 120 sequentially through the first electrical connection member 160 and the first lead-out wire 128, and provides the converted electrical energy to the second motor 220 sequentially through the second electrical connection member 260 and the second lead-out wire 228, thereby controlling running states of the first motor 120 and the second motor 220.

With continued reference to FIG. 1 to FIG. 23, for example, a power component 371 is disposed on a side of the drive circuit board 370 that faces the first motor 120 and the second motor 220. A power component 371 disposed corresponding to the first motor 120 may be denoted as a first power component 376, and a power component 371 disposed corresponding to the second motor 220 may be denoted as a second power component 377. The first power component 376 is attached to the first radiator 122 through a heat-conducting structure such as heat-conducting silicone grease or a heat-conducting medium. The second power component 377 is attached to the second radiator 222 through a heat-conducting structure such as heat-conducting silicone grease or a heat-conducting medium. In other words, the first power component 376 of the motor controller 300 is disposed corresponding to the first radiator 122, and is attached to the first radiator 122 through heat-conducting silicone grease, to exchange, by using the first radiator 122, heat generated by the first power component 376 during working. The second power component 377 of the motor controller 300 is disposed corresponding to the second radiator 222, and is attached to the second radiator 222 through a heat-conducting structure such as heat-conducting silicone grease or a heat-conducting medium, to exchange, by using the second radiator 222, heat generated by the second power component 377 during working. The first power component 376 and the second power component 377 may be silicon carbide MOS transistors, or may be power switch transistors such as IGBTs. The first power component 376 and the second power component 377 each may be a power assembly formed by a plurality of power switch transistors.

Still referring to FIG. 1 to FIG. 23, in addition, the hydraulic pump in the present disclosure is a bidirectional pump. The hydraulic pump has a first opening and a second opening that communicate with each other. Hydraulic oil may flow from the first opening to the second opening, or may flow from the second opening to the first opening. The hydraulic power supply apparatus 600 may further include a detection assembly 140 and an adapter assembly. The detection assembly 140 may include a first sensor 142 and a second sensor 143. The first sensor 142 is suitable for detecting an oil temperature of the hydraulic pump at the first opening. The second sensor 143 is suitable for detecting an oil temperature of the hydraulic pump at the second opening. One end of the adapter assembly 149 is electrically connected to the first sensor 142 and the second sensor 143, and the other end of the adapter assembly 149 is suitable for being electrically connected to the motor controller 300. The first sensor 142 detects the oil temperature of the hydraulic pump at the first opening, the second sensor 143 detects the oil temperature of the hydraulic pump at the second opening, and both the first sensor 142 and the second sensor 143 are connected to the same adapter assembly 149. This can simplify a line structure, facilitates mounting and maintenance, and further helps reduce sealing difficulty and costs.

For example, at least a part of the detection assembly 140 is disposed between the hydraulic pump and the motor. The detection assembly 140 herein may make full use of space of the hydraulic pump and the motor in the axial direction D2 on the basis of ensuring that the oil temperature of the hydraulic pump may be detected, thereby helping shorten the sensing line.

For example, the adapter assembly 149 may include at least one of a first adapter board 144 and a second adapter board 148. The first adapter board 144 is located inside the motor. The first adapter board 144 is electrically connected to the first sensor 142 and the second sensor 143. The second adapter board 148 is located outside the motor. The second adapter board 148 is suitable for being detachably electrically connected to the motor controller 300.

In an example, the adapter assembly 149 has only the second adapter board 148. The second adapter board 148 may be connected to the motor controller 300 through an electrical connector such as a low-voltage plugging part. The second adapter board 148 may be electrically connected to the first sensor 142 and the second sensor 143 through a cable to implement a communication connection between the detection assembly 140 and the motor controller 300.

In another example, the adapter assembly 149 has only the first adapter board 144. One end of the first adapter board 144 is electrically connected to the first sensor 142 and the second sensor 143, and the other end may be connected to the motor controller 300 through a cable. In this way, a communication connection between the detection assembly 140 and the motor controller 300 may also be implemented.

In a preferred example, the adapter assembly 149 includes a first adapter board 144, a second adapter board 148, and an adapter post 145. Both the first adapter board 144 and the second adapter board 148 are circuit boards. One end of the adapter post 145 is electrically connected to the first adapter board 144. The other end of the adapter post 145 is electrically connected to the second adapter board 148. The adapter post 145 may include an inner conductor and an outer hard housing. The outer hard housing is fastened to the first adapter board 144. One end of the inner conductor is electrically connected to the first adapter board 144. The other end of the inner conductor is electrically connected to the second adapter board 148. The second adapter board 148 may be fixedly connected relative to the motor.

Further, the first sensor 142 is a temperature sensor or a temperature-pressure sensor. The second sensor 143 is a temperature sensor or a temperature-pressure sensor. The first sensor 142 and the second sensor 143 may be the same sensor, or may be different sensors.

For example, the hydraulic pump may include a pump housing. The pump housing may include a first connecting hole and a second connecting hole. The first sensor 142 is mounted in the first connecting hole. The second sensor 143 is mounted in the second connecting hole. The first connecting hole and the second connecting hole are provided in the pump housing, so that the detection assembly 140 can be mounted in the pump housing, which helps improve accuracy of detecting the oil temperatures at the two openings of the hydraulic pump by the detection assembly 140.

In the hydraulic power supply apparatus 600 having two motors and two hydraulic pumps, the two motors are respectively the first motor 120 and the second motor 220 that are coaxially arranged opposite to each other. The first motor 120 includes the first motor housing 121, and the second motor 220 includes the second motor housing 221. The first motor housing 121 and the second motor housing 221 are fixedly connected to each other or are configured as an integrated part. The two hydraulic pumps are located at outer ends of the two motors and are arranged coaxially with the motors. The two hydraulic pumps are respectively denoted as the first hydraulic pump 110 and the second hydraulic pump 210. The first hydraulic pump 110 is connected to the first motor 120, and the second hydraulic pump 210 is connected to the second motor 220. A pump housing of the first hydraulic pump 110 is a first pump housing, and a pump housing of the second hydraulic pump 210 is a second pump housing. The first pump housing is provided with a first connecting hole 113 and a third connecting hole 114. The first connecting hole 113 is configured to mount the first sensor 142, and the third connecting hole 114 is configured to mount the second sensor 143. The second pump housing is provided with a second connecting hole 114 and a fourth connecting hole 214. The second connecting hole 114 is configured to mount the first sensor 142, and the fourth connecting hole 214 is configured to mount the second sensor 143.

Optionally, the first connecting hole is parallel to the second connecting hole. This facilitates processing and assembly of the sensor.

In the illustrated example, both the first connecting hole and the second connecting hole are parallel to an axial direction D2 of the hydraulic pump.

For example, at least one of the first sensor 142 and the second sensor 143 abuts against the first adapter board 144. This will be understood as follows: the first sensor 142 abuts against the first adapter board 144, and the second sensor 143 abuts against the first adapter board 144 in another configuration. Alternatively, this will be understood as follows: the first sensor 142 is connected to the first adapter board 144 in another configuration, and the second sensor 143 abuts against the first adapter board 144. Alternatively, this will be understood as follows: both the first sensor 142 and the second sensor 143 abut against the first adapter board 144. In this way, a mounting operation of a sensor is more simple and convenient, thereby improving assembly efficiency.

Further, a spring is disposed on an end part of at least one of the first sensor 142 and the second sensor 143. The spring abuts against the first adapter board 144. Either of the first sensor 142 and the second sensor 143 abuts against the first adapter board 144 through the spring, or both the first sensor 142 and the second sensor 143 abut against the first adapter board 144 through the spring. In a mounting state, abutment between the sensor and the first adapter board 144 may be implemented through preload force of the spring, thereby improving abutment reliability, and helping prevent poor contact due to factors such as bumpy and vibration.

For example, the motor may include a motor housing. The motor housing is provided with a temperature sensing through-hole. The temperature sensing through-hole at least partially extends to the outside of the motor housing in a direction intersecting the axial direction D2 of the motor. The adapter assembly 149 is mounted in the temperature sensing through-hole. The temperature sensing through-hole is provided to accommodate at least a part of the adapter assembly 149, thereby reducing space occupation of the adapter assembly 149. In addition, the adapter assembly 149 can be fastened and protected.

In the illustrated example, the temperature sensing through-hole runs through the motor housing in a radial direction of the motor. In other words, the temperature sensing through-hole runs through to an inner cavity of the motor housing. The foregoing first connecting hole and the foregoing second connecting hole may communicate with the inner cavity of the motor housing in the axial direction D2 of the motor. Therefore, it is convenient to connect the first sensor 142 and the second sensor 143 to the adapter assembly 149 in the inner cavity of the motor.

Referring to FIG. 1 to FIG. 23, in the hydraulic power supply apparatus 600 having two motors and two hydraulic pumps, the two motors are respectively the first motor 120 and the second motor 220 that are coaxially arranged opposite to each other. The first motor 120 includes the first motor housing 121, and the second motor 220 includes the second motor housing 221. The first motor housing 121 and the second motor housing 221 are fixedly connected to each other or are configured as an integrated part. In an embodiment in which the first motor housing 121 and the second motor housing 221 are assembled together by means of welding or the like, the first motor housing 121 is provided with a first through-hole 121e, the second motor housing 221 is provided with a third through-hole 221e, and an adapter assembly 149 is mounted in each of the first through-hole 121e and the third through-hole 221e. In an embodiment in which the first motor housing 121 and the second motor housing 221 are configured as an integrated part or an integrated motor housing 500, the integrated motor housing 500 is provided with a first through-hole 500g and a third through-hole 500o, and an adapter assembly 149 is mounted in each of the first through-hole 500g and the third through-hole 500o.

In the foregoing embodiment, a flow channel is formed inside the motor housing. The flow channel and a part of the motor housing form a radiator. The radiator is arranged corresponding to the motor controller to be suitable for cooling a power component in the motor controller. Both the temperature sensing through-hole and the flow channel are located on the same side part of the motor housing, and are spaced apart from each other. In the axial direction D2 of the motor, the temperature sensing through-hole is located at ends that are of the motor housings of the two motors and that are away from each other, that is, at outer ends of the motor housings. The outer end of the motor housing is used to connect to the pump housing of the hydraulic pump, and therefore, this helps reduce a distance between the adapter assembly and the temperature sensor, to facilitate mounting of the adapter assembly and the temperature sensor.

In addition, the motor housing further includes a motor sensing through-hole. The hydraulic power supply apparatus 600 may further include a motor sensor (not shown). A wire outlet end of the motor sensor at least partially extends through the motor sensing through-hole. A detection end of the motor sensor is connected to a winding. The motor sensor is connected to the motor controller. The motor sensor is configured to detect a temperature of the winding, so that a vehicle controller can adjust and control a running state of the radiator based on the temperature of the winding. For example, when the temperature of the winding is relatively high, the vehicle control apparatus may control a cooling circuit of the radiator to accelerate a circulation speed, thereby improving heat dissipation efficiency. When the temperature of the winding is relatively low, the vehicle controller may control the cooling circuit of the radiator to slow down the circulation speed, thereby reducing energy consumption. In an embodiment in which the first motor housing and the second motor housing are assembled together by means of welding or the like, the first motor housing is provided with a second through-hole 121s, the second motor housing is provided with a fourth through-hole 221s, and a motor sensor is mounted in each of the second through-hole 121s and the fourth through-hole 221s. In an embodiment in which the first motor housing and the second motor housing are configured as an integrated part or an integrated motor housing, the integrated motor housing 500 is provided with a second through-hole 500t and a fourth through-hole 500u, and a motor sensor is mounted in each of the second through-hole 500t and the fourth through-hole 500u.

For example, the motor sensing through-hole extends to the outside in the radial direction of the motor. The motor sensing through-hole and the temperature sensing through-hole are arranged side by side on the same side part of the motor housing, and the motor sensing through-hole and the flow channel are spaced apart from each other. This facilitates assembly of the sensor, and helps simplify a line and improve space utilization.

The detection assembly 140 according to the present disclosure is disposed in the first motor pump 100 and the second motor pump 200. The detection assembly 140 is configured to detect oil temperatures of the first hydraulic pump 110 and/or the second hydraulic pump 210. The motor controller 300 may further include a signal connector 320. The signal connector 320 is connected to the electrical control housing 310. The control circuit board 360 is electrically connected to the signal connector 320 and the detection assembly 140. The signal connector 320 is suitable for being electrically connected to a control apparatus of a vehicle. The detection assembly 140 may detect the oil temperatures of the first hydraulic pump 110 and the second hydraulic pump 210, and send the oil temperatures to the control circuit board 360. The control circuit board 360 transmits the oil temperatures to the control apparatus of the vehicle through the signal connector 320. The control circuit board 360 may further receive a control instruction from the control apparatus, and control running states of the first motor 120 and the second motor 220 based on the control instruction, to indirectly control running states of the first hydraulic pump 110 and the second hydraulic pump 210.

Detection assemblies 140 are disposed both between the first motor 120 and the first hydraulic pump 110, and between the second motor 220 and the second hydraulic pump 210. The two detection assemblies 140 may be the same. The following uses an example in which the detection assembly 140 is applied to the first motor pump 100 for description.

Still referring to FIG. 1 to FIG. 19, the detection assembly 140 according to the present disclosure is disposed in the first hydraulic pump 110 or between the first hydraulic pump 110 and the first motor 120. The detection assembly 140 may include a first sensor 142 and a second sensor 143. The first hydraulic pump 110 is a bidirectional hydraulic pump, and includes a first opening and a second opening that are suitable for oil circulation. The first sensor 142 is configured to detect an oil temperature of the first hydraulic pump 110 at the first opening, and the second sensor 143 is configured to detect an oil temperature of the first hydraulic pump 110 at the second opening. The hydraulic power supply apparatus 600 may further include an adapter assembly 149. One end of the adapter assembly 149 is electrically connected to the first sensor 142 and the second sensor 143, and the other end of the adapter assembly 149 is configured to electrically connect to the motor controller 300, to send the detected oil temperature to the motor controller 300. The first sensor 142 and the second sensor 143 are connected through one adapter assembly 149, and the adapter assembly 149 can transmit the oil temperatures detected by the first sensor 142 and the second sensor 143 to the motor controller 300.

Similarly, the detection assembly 140 is further disposed in the second hydraulic pump 210 or between the second motor 220 and or the second hydraulic pump 210. The second hydraulic pump 210 is a bidirectional hydraulic pump, and includes a first opening and a second opening that are suitable for oil circulation. The first sensor 142 is configured to detect an oil temperature of the second hydraulic pump 210 at the first opening, and the second sensor 143 is configured to detect an oil temperature of the second hydraulic pump 210 at the second opening. An adapter assembly 149 is disposed on the second motor 220. One end of the adapter assembly 149 is electrically connected to the first sensor 142 and the second sensor 143, and the other end of the adapter assembly 149 is configured to electrically connect to the motor controller 300, to send the detected oil temperature to the motor controller 300. The first sensor 142 and the second sensor 143 are connected through one adapter assembly 149, and the adapter assembly 149 can transmit the oil temperatures detected by the first sensor 142 and the second sensor 143 to the motor controller 300.

In this way, space occupied by the detection assembly 140 can be reduced, and a circuit structure can be simplified, which helps reduce sealing difficulty, reduce costs, and improve compactness of a structure of a motor pump.

Referring to FIG. 6 and FIG. 16, for example, the first hydraulic pump 110 may include a first pump housing (not marked). The first pump housing is provided with a first connecting hole 113 and a third connecting hole 114. Both the first connecting hole 113 and the third connecting hole 114 extend in an axial direction D2 of the first pump housing to an end surface of the first pump housing that faces the first motor 120. The first sensor 142 is mounted in the first connecting hole 113, and the second sensor 143 is mounted in the third connecting hole 114. A spring (not shown) is disposed at an end of each of the first sensor and the second sensor that is close to the adapter assembly 149. Advantages of this design lie in the following: The first sensor 142 can be directly mounted in the first connecting hole 113, and the second sensor 143 can be directly mounted in the third connecting hole 114. In addition, the first sensor 142 and the second sensor 143 abut against the adapter assembly 149 through the spring, so that mounting is relatively convenient. The first motor housing 121 is provided with a first through-hole 121e. The first through-hole 121e extends to the inside and the outside of the first motor housing 121 in a direction intersecting the axial direction D2 of the first motor 120. The adapter assembly 149 extends through the first through-hole 121e. Correspondingly, referring to FIG. 7 and FIG. 17, the second hydraulic pump 210 may include a second pump housing. The second pump housing is provided with a second connecting hole 213 and a fourth connecting hole 214. Both the second connecting hole 213 and the fourth connecting hole 214 extend in an axial direction D2 of the second pump housing to an end surface of the second pump housing that faces the second motor 220. The first sensor 142 is connected to the second connecting hole 213, and the second sensor 143 is connected to the fourth connecting hole 214. The second motor housing 221 is provided with a third through-hole 221e. The third through-hole 221e extends to the inside and the outside of the second motor housing 221 in a direction intersecting the axial direction D2 of the second motor 220. The adapter assembly 149 extends through the third through-hole 221e.

Further, referring to FIG. 6 and FIG. 16, both the first connecting hole 113 and the third connecting hole 114 run through the first pump housing in the axial direction D2 of the first pump housing. The first motor pump 100 may further include two first sealing rings 141. The first sealing rings 141 are respectively connected between the first sensor 142 and the first connecting hole 113 through sealing, and connected between the second sensor 143 and the third connecting hole 114 through sealing. In this way, it is convenient to assemble the first sensor 142 in the first connecting hole 113, and assemble the second sensor 143 in the third connecting hole 114. Sealing performance between the first sensor 142 and the first connecting hole 113 and between the second sensor 143 and the third connecting hole 114 are improved by providing the first sealing rings 141. Correspondingly, referring to FIG. 7 and FIG. 17, both the second connecting hole 213 and the fourth connecting hole 214 run through the first pump housing in the axial direction D2 of the first pump housing. The second motor pump 200 may further include two second sealing rings 241. The second sealing rings 241 are respectively connected between the first sensor 142 and the second connecting hole 213 through sealing, and connected between the second sensor 143 and the fourth connecting hole 214 through sealing. In this way, it is convenient to assemble the first sensor 142 in the second connecting hole 213, and assemble the second sensor 143 in the fourth connecting hole 214. Sealing performance between the first sensor 142 and the second connecting hole 213 and between the second sensor 143 and the fourth connecting hole 214 are improved by providing the second sealing rings 241.

Referring to FIG. 6 to FIG. 8, FIG. 16 to FIG. 18, and FIG. 23 and FIG. 24, for example, the adapter assembly 149 may include a first adapter board 144, an adapter post 145, and a second adapter board 148. The first adapter board 144 is electrically connected to the first sensor 142 and the second sensor 143. Specifically, the first sensor 142 and the second sensor 143 may abut against the first adapter board 144 through the spring. The adapter post 145 penetrates through the first through-hole 121e. One end of the adapter post 145 is electrically connected to the first adapter board 144. The second adapter board 148 is electrically connected to the other end of the adapter post 145. The second adapter board 148 is suitable for being detachably electrically connected to the motor controller 300 through an electrical connector such as a low-voltage plugging terminal. When the adapter assembly 149 is mounted in the first motor pump 100, the second adapter board 148 is located outside the first motor 120. When the adapter assembly 149 is mounted in the second motor pump 200, the second adapter board 148 is located outside the second motor 220.

Referring to FIG. 6 to FIG. 8, and FIG. 16 to FIG. 18, in addition, the first motor pump 100 may further include a second sealing ring 146, and the second sealing ring 146 is connected between the adapter assembly 149 and the first through-hole 121e through sealing. In this way, sealing performance between the adapter assembly 149 and the first through-hole 121e can be improved. Correspondingly, the second motor pump 200 may further include a second sealing ring 146, and the second sealing ring 146 is connected between the adapter assembly 149 and the third through-hole 221e through sealing. In this way, sealing performance between the adapter assembly 149 and the third through-hole 221e can be improved.

Still referring to FIG. 6 to FIG. 8, and FIG. 16 to FIG. 18, in addition, the first motor pump 100 may further include a first end cover assembly 130. The first end cover assembly 130 is connected to an end part of the first hydraulic pump 110 that is away from the first motor 120 in the axial direction D2 of the first hydraulic pump 110. In this way, the first motor 120, the first hydraulic pump 110, and the first end cover assembly 130 form the first motor pump 100. Correspondingly, the second motor pump 200 may further include a second end cover assembly 230. The second end cover assembly 230 is connected to an end part of the second hydraulic pump 210 that is away from the second motor 220 in the axial direction D2 of the second hydraulic pump 210. In this way, the second motor 220, the second hydraulic pump 210, and the second end cover assembly 230 form the second motor pump 200.

Referring to FIG. 1, FIG. 8, FIG. 10, FIG. 11, FIG. 18, FIG. 19, FIG. 20, FIG. 24, and FIG. 25, in addition, the motor controller 300 may further include a breather valve 340. The electrical control housing 310 is connected to the first motor housing 121 and the second motor housing 221. The breather valve 340 is connected to the electrical control housing 310. The breather valve 340 communicates with the inside and the outside of the electrical control housing 310 to balance pressure inside and outside the electrical control housing 310. Specific air tightness usually needs to be ensured between the electrical control housing 310 and each of the first motor housing 121 and the second motor housing 221. When the motor controller 300 works and runs, a specific amount of heat is generated in the motor controller 300, which causes a change of pressure in a housing of the motor controller 300. The breather valve 340 is disposed to balance the pressure inside and outside the electrical control housing 310, so that a running state of the motor controller 300 can be improved.

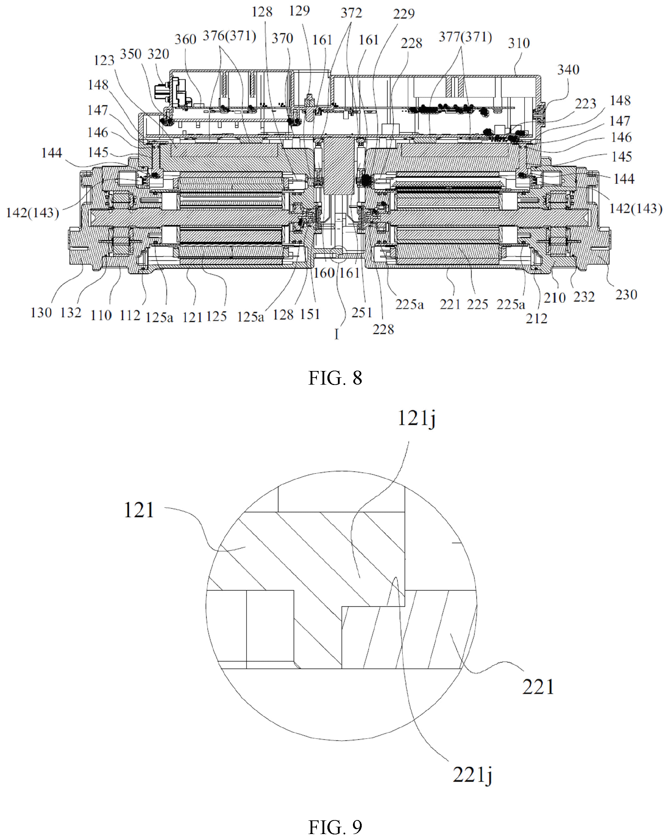

Referring to FIG. 8, FIG. 10, FIG. 18, FIG. 19, FIG. 24, and FIG. 25, in addition, the motor controller 300 may further include a shielding plate 350. The shielding plate 350 is connected between the control circuit board 360 and the drive circuit board 370 in the first direction D1 to shield an interference signal generated by the drive circuit board 370 between the control circuit board 360 and the drive circuit board 370.

As shown in FIG. 1 to FIG. 19, the hydraulic power supply apparatus 600 according to an embodiment of the present disclosure may include a first motor pump 100 and a second motor pump 200 that are disposed opposite to each other in an axial direction D2, and a motor controller 300. The axial direction D2 herein is parallel to an axis of the first motor pump 100 and an axis of the second motor pump 200. The first motor pump 100 includes a first motor 120, a first hydraulic pump 110, and a first end cover assembly 130 that are sequentially arranged in the axial direction D2. The first motor 120 is closer to the second motor pump 200. The first end cover assembly 130 is configured to be mounted on a chassis of a vehicle. The second motor pump 200 includes a second motor 220, a second hydraulic pump 210, and a second end cover assembly 230 that are sequentially arranged in the axial direction D2. The second motor 220 is closer to the second motor pump 200. The second end cover assembly 230 is configured to be mounted on a chassis of a vehicle. The motor controller 300 is connected to the first motor pump 100 and the second motor pump 200. In a state in which the hydraulic power supply apparatus 600 is mounted on a vehicle, the motor controller 300 is located above the first motor pump 100 and the second motor pump 200. The motor controller 300 has a signal connector 320, a bus electrical terminal 330, and a breather valve 340. The signal connector 320 is configured to communicate with the entire vehicle. The bus electrical terminal 330 is configured to supply power and connect to the motor. The breather valve 340 is configured to balance an internal pressure difference of the electrical control housing 310.

Referring to FIG. 1 to FIG. 19, an assembly process of the first motor pump 100 may include the following steps.

Step 1: assemble, in a first rotary through-hole 121h at an inner end of the first motor housing 121 through a first rotary snap spring 152, a first rotary body 153 mounted with a first rotary sealing ring 151. In a mounting state in which the first motor housing 121 is connected to the second motor housing 221, the inner end of the first motor housing 121 is closer to the second motor housing 221 than an outer end of the first motor housing 121.

Step 2: mount the first electrical connection member 160 on an end part of the inner end of the first motor housing 121.

Step 3: mount, in the first through-hole 121e, the adapter post 145 mounted with the second sealing ring 146 and the first adapter board 144, fasten the adapter post 145 to the first motor housing 121 through a fastening plate 147, and then weld the second adapter board 148 to a signal connection terminal such as a signal pin of the adapter post 145, where the second adapter board 148 has a plug-type electrical connector configured to electrically connect to the control circuit board 360.

Step 4: mount the first motor body 125 inside the first motor housing 121 from the outer end of the first motor housing 121, and after the first lead-out wire 128 on the first motor body 125 passes through a first wire-through hole 121g of the first motor housing 121 and is mounted with a first insulated sealing member 129, connect the first lead-out wire 128 to the first electrical connection terminal 161 of the first electrical connection member 160.

Step 5: mount a temperature sensor mounted with the first sealing ring 141 to the first connecting hole 113 on the first hydraulic pump 110.

Step 6: assemble the first hydraulic pump 110 to an end part of the outer end of the first motor housing 121 through sealing. Herein, a first pump housing limiting hole 121n disposed on the end part of the outer end of the first motor housing 121 and a first pump housing positioning post 111 on an end part of the first hydraulic pump 110 may fit with each other to implement positioning.

Step 7: assemble, through sealing, the first end cover assembly 130 on an end part of the first hydraulic pump 110 that is away from the first motor housing 121, to complete assembly of the first motor pump 100.

In other words, a mounting process of the first motor pump 100 may include the following: The first rotary body 153 with the first rotary sealing ring 151 is mounted on an end part of the first motor pump 100 that faces the second motor pump 200, and is fastened through the first rotary snap spring 152. The first electrical connection member 160 corresponding to the first motor pump 100 is mounted at a junction between the first motor pump 100 and the second motor pump 200. After passing through the first insulated sealing member 129, the first lead-out wire 128 is connected to the first electrical connection terminal 161 on the first electrical connection member 160 by means of abutting, plugging, clamping, or the like. The second electrical connection terminal 169 of the first electrical connection member 160 may be connected to an alternating-current terminal 372 on the drive circuit board 370 in a plugging manner or the like. The alternating-current terminal 372 may be an alternating-current connector, and is adapted to fit with the second electrical connection terminal 169 through plugging. In other words, the second electrical connection terminal 169 is plugged into the alternating-current connector on the drive board and is conductively connected. This connection means is similar to a connection between a plug and a socket of a household appliance, and facilitates production and assembly. After the first motor body 125 is mounted to an end of the first motor pump 100 that is away from the second motor pump 200 in the axial direction D2, the first hydraulic pump 110 mounted with a first pump housing sealing ring 112 and a first core sealing ring 125a is mounted on an end part of the first motor housing 121 that is away from the first motor pump 100 in the axial direction D2. Finally, the first end cover assembly 130 is mounted on an end part of the first hydraulic pump 110 that is away from the first hydraulic pump 110 in the axial direction D2. The first end cover assembly 130 herein may include a first end cover 131 and a first end cover sealing ring 132. The first end cover 131 may be fastened to the first pump housing of the first hydraulic pump 110 through fasteners such as bolts. The first end cover sealing ring 132 is disposed between the first hydraulic pump 110 and the first end cover 131. The first end cover 131 has a first cantilever 131a that extends toward two sides in a direction intersecting the axis of the first motor pump 100. The first cantilever 131a may be specifically a connecting lug.

There may be two temperature sensors assembled in the first motor pump 100. One of the two temperature sensors is configured to detect a temperature of the first motor 120, and the other temperature sensor is configured to detect a temperature of the first hydraulic pump 110. Temperature signals detected by the two temperature sensors may be sent to the control circuit board 360 through the same adapter post 145 and the second adapter board 148. Alternatively, the sensor used to detect the temperature of the first motor 120 and the adapter post 145 may be disposed side by side. In this way, space can be reduced, and sealing costs and signal transfer costs can be reduced. The two temperature sensors may be the same or different.

The first rotary sealing ring 151, the first rotary snap spring 152, and the first rotary body 153 form a part of a first rotary assembly 150.

Referring to FIG. 1 to FIG. 19, an assembly process of the second motor pump 200 may include the following steps.

Step 1: assemble, in a second rotary through-hole 221h at an inner end of the second motor housing 221 through a second rotary snap spring 252, a second rotary body 253 mounted with a second rotary sealing ring 251. In a mounting state in which the second motor housing 221 is connected to the second motor housing 221, the inner end of the second motor housing 221 is closer to the first motor housing 121 than an outer end of the second motor housing 221.

Step 2: mount the second electrical connection member 260 on an end part of the inner end of the second motor housing 221.

Step 3: mount, in the third through-hole 221e, the adapter post 145 mounted with the second sealing ring 146 and the first adapter board 144, fasten the adapter post 145 to the second motor housing 221 through a fastening plate 147, and then weld the second adapter board 148 to a signal connection terminal such as a signal pin of the adapter post 145, where the second adapter board 148 has a plug-type electrical connector configured to electrically connect to the control circuit board 360.

Step 4: mount the second motor body 225 inside the second motor housing 221 from the outer end of the second motor housing 221, and after the second lead-out wire 228 on the second motor body 225 passes through a second wire-through hole 221g of the second motor housing 221 and is mounted with a second insulated sealing member 229, connect the second lead-out wire 228 to the second electrical terminal of the second electrical connection member 260.

Step 5: mount a second temperature sensor mounted with the second sealing ring 141 to the second connecting hole 213 on the second hydraulic pump 210.

Step 6: assemble the second hydraulic pump 210 to an end part of the outer end of the second motor housing 221 through sealing. Herein, a second pump housing limiting hole 221n disposed on the end part of the outer end of the second motor housing 221 and a second pump housing positioning post 211 on an end part of the second hydraulic pump 210 may fit with each other to implement positioning.

Step 7: assemble, through sealing, the second end cover assembly 230 on an end part of the second hydraulic pump 210 that is away from the second motor housing 221, to complete assembly of the second motor pump 200.

In other words, a mounting process of the second motor pump 200 may include the following: The second rotary body 253 with the second rotary sealing ring 251 is mounted on an end part of the second motor pump 200 that faces the first motor pump 100, and is fastened through the second rotary snap spring 252. The second electrical connection member 260 corresponding to the second motor pump 200 is mounted at a junction between the first motor pump 100 and the second motor pump 200. After passing through the second insulated sealing member 229, the second lead-out wire 228 is connected to the second electrical terminal on the second electrical connection member 260 by means of abutting, plugging, clamping, or the like. The fifth electrical terminal of the second electrical connection member 260 may be connected to an alternating-current terminal 372 on the drive circuit board 370 in a plugging means or the like. The alternating-current terminal 372 may be an alternating-current connector, and is adapted to fit with the fifth electrical terminal through plugging. In other words, the fifth electrical terminal is plugged into the alternating-current connector on the drive board and is conductively connected. This connection means is similar to a connection between a plug and a socket of a household appliance, and facilitates production and assembly. After the second motor body 225 is mounted at an end of the second motor pump 200 that is away from the first motor pump 100 in the axial direction D2, the second hydraulic pump 210 mounted with a second pump housing sealing ring 212 and a second core sealing ring 225a is mounted on an end part of the second motor housing 221 that is away from the second motor pump 200 in the axial direction D2. Finally, the second end cover assembly 230 is mounted on an end part of the second hydraulic pump 210 that is away from the second hydraulic pump 210 in the axial direction D2. The second end cover assembly 230 herein may include a second end cover 231 and a second end cover 231 sealing ring 232. The second end cover 231 may be fastened to the second pump housing of the second hydraulic pump 210 through fasteners such as bolts. The second end cover 231 sealing ring 232 is disposed between the second hydraulic pump 210 and the second end cover 231. The second end cover 231 has a second cantilever 231a that extends toward two sides in a direction intersecting the axis of the second motor pump 200. The second cantilever 231a may be specifically a connecting lug. A structure of the second cantilever 231a may be the same as or different from that of the first cantilever 131a.

There may be two second temperature sensors assembled in the second motor pump 200. One of the two second temperature sensors is configured to detect a temperature of the second motor 220, and the other second temperature sensor is configured to detect a temperature of the second hydraulic pump 210. Temperature signals detected by the two second temperature sensors may be sent to the control circuit board 360 through the same adapter post 145 and the second adapter board 148. Alternatively, the sensor used to detect the temperature of the first motor 120 and the adapter post 145 may be disposed side by side. In this way, space can be reduced, and sealing costs and signal transfer costs can be reduced. The two second temperature sensors may be the same or different.

The second rotary sealing ring 251, the second rotary snap spring 252, and the second rotary body 253 form a part of a second rotary assembly 250.

FIG. 1 to FIG. 19 are schematic diagrams of an assembly structure of a hydraulic power supply apparatus 600 according to an embodiment of the present disclosure. After the first motor 120 and the second motor 220 are assembled to form an integrated dual-motor, the drive circuit board 370 is mounted on an upper part of the integrated dual-motor and is separately conductively connected to the first electrical connection member 160 and the second electrical connection member 260. In addition, the power component 371 on the drive circuit board 370 is tightly attached to the first radiator 122 and the second radiator 222 through heat-conducting silicone grease. Then, after the control circuit board 360 mounted with the signal connector 320 is mounted in the electrical control housing 310, the shielding plate 350 is mounted to shield a region on the control circuit board 360 susceptible to interference, to improve electromagnetic compatibility. After the second adapter board 148 and the signal connection terminal of the drive circuit board 370 are connected to the control circuit board 360, the electrical control housing 310 and the integrated dual-motor are assembled together through sealing. Finally, the bus electrical terminal 330 is mounted, so that a copper busbar of the bus electrical terminal 330 is plugged into a direct-current terminal 373 on the drive circuit board 370. The direct-current terminal 373 herein may be a direct-current connector. This connection means between the bus electrical terminal 330 and the direct-current connector is also the same as the above-mentioned connection means between the control circuit board 360 and the first electrical connection member 160 or the second electrical connection member 260, and is similar to a connection means between a plug and a socket of a household appliance. The assembly is simple and easy to operate. In addition, three-phase copper busbars of the first electrical connection member 160 and the second electrical connection member 260 are all disposed vertically, which facilitates heat dissipation of the copper busbars. The three-phase copper busbar herein will be understood as first electrical connection terminals 161 and second electrical connection terminals 169 of the first electrical connection member 160 and the second electrical connection member 260.

FIG. 8 is a schematic diagram of an internal structure of a hydraulic power supply apparatus 600 according to an embodiment of the present disclosure. The figure shows an internal layout of the motor controller 300 and a relationship between the first radiator 122, the second radiator 222, and the power component 371. Structures of the first motor 120 and the second motor 220 may be the same, and structures of the first radiator 122 and the second radiator 222 may be the same. For ease of description herein, the first motor 120 and the second motor 220 are collectively referred to as a motor, and the first radiator 122 and the second radiator 222 are collectively referred to as a radiator. The radiator may be a heat pipe, or may be a liquid-cooled heat dissipation assembly that allows circulation of a heat exchange medium. A power component 371 is disposed above each of the radiators of the two motors. The power component 371 herein may be a power component such as an IGBT power component or a silicon carbide MOS transistor. The radiator is deeply embedded in the motor housing of the motor, and there is oil that can circulate inside the motor housing. In this way, the power component 371 can achieve good heat dissipation through the radiator, so that a temperature condition of the power component 371 is more proper during use. The drive circuit board 370, the shielding plate 350, the control circuit board 360, and the electrical control housing 310 are disposed above the power component 371. The signal connector 320 of the control circuit board 360 passes through the electrical control housing 310 and extends from the electrical control housing 310 to the outside. The electrical control housing 310 is further mounted with the breather valve 340 for preventing condensation and balancing a pressure difference in heat dissipation. Below two ends of the control circuit board 360 in the second direction D2, there is the second adapter board 148 and the fastening plate 147. The adapter post 145 mounted with the second sealing ring 146 and the first adapter board 144 are mounted in the temperature sensing through-holes 121e and 221e. The first adapter board 144 is mounted at the other end of the adapter post 145. The first adapter board 144 is connected and conductive to the first sensor 142 and the second sensor 143 through the springs of the first sensor 142 and the second sensor 143. Each motor pump is provided with two sensors configured to detect a temperature. One type of sensor is the first sensor 142 and the second sensor 143. The first sensor 142 and the second sensor 143 are sensors configured to detect oil temperatures of the hydraulic pump at an inlet and an outlet. Another type of sensor may be referred to as a motor sensor, and the motor sensor may be a motor NTC temperature sensor, configured to detect a temperature of a winding of the motor. Temperature signals detected by the first sensor 142 and the second sensor 143 are transmitted to the second adapter board 148 through the first adapter board 144 and the adapter post 145, and then transmitted to the control circuit board 360 through the second adapter board 148. In this way, space can be reduced, and sealing costs and signal transfer costs can be reduced.

Referring to FIG. 1 to FIG. 19, according to the hydraulic power supply apparatus 600 in the present disclosure, a connection between the first motor housing 121 and the second motor housing 221 is more secure through friction welding of the two motors. Alternatively, the motor housings of the two motors are formed integrally, which is not only more secure, but also can improve sealing performance and assembly efficiency. The first radiator 122 is added to the first motor housing 121, and the second radiator 222 is added to the second motor housing 221, so that a heat dissipation effect of the power component 371 of the motor controller 300 can be improved, thereby improving power of a motor of the same volume. In addition, the first electrical connection member 160 and the second electrical connection member 260 in three embodiments are provided, so that a connection between a lead-out wire of a motor winding and the motor controller 300 can be well resolved. The detection assembly 140 is disposed to detect temperature data. The oil temperatures of the hydraulic pump at the inlet and the outlet are detected by using the first sensor 142 and the second sensor 143, and a temperature of a motor winding is detected by using a motor NTC temperature sensor. After the detection assembly 140 is combined and assembled with the adapter assembly 149 including the first adapter board 144, the adapter post 145, the second sealing ring 146, the fastening plate 147, and the second adapter board 148, a connector for easy plugging may be formed. In addition, both the first adapter assembly 149 of the first motor pump 100 and the second adapter assembly 149 of the second motor pump 200 are connected to the control circuit board 360, so that a line can be shortened. Both a connection between the direct-current bus electrical terminal 330 and the drive circuit board 370, and a connection between the drive circuit board 370 and each of the first electrical connection member 160 and the second electrical connection member 260 are made through a connector, which can reduce assembly space and facilitate automatic production. In addition, connecting copper busbars of the first electrical connection member 160 and the second electrical connection member 260 are all arranged vertically, thereby improving a heat dissipation effect.

The present disclosure further provides a chassis system. The chassis system may include a shock absorber and the hydraulic power supply apparatus 600 according to the foregoing. The hydraulic power supply apparatus 600 fluidly communicates with the shock absorber. The hydraulic power supply apparatus 600 is configured to control active vibration damping of the shock absorber.

According to the chassis system provided in the present disclosure, the foregoing hydraulic power supply apparatus 600 is applied to improve a vibration damping effect of the chassis system.

The present disclosure further provides a vehicle. The vehicle may include the foregoing hydraulic power supply apparatus 600, or may include the foregoing chassis system.

According to the vehicle in the present disclosure, the foregoing hydraulic power supply apparatus 600 or the foregoing chassis system is applied to help improve stability of the vehicle during driving and comfort of a driver and a passenger.

Referring to FIG. 1 to FIG. 25, for example, the vehicle may further include an air conditioner. The air conditioner fluidly communicates with first flow channels 121o and 500i and second flow channels 221o and 500q to share a heat exchange medium with the first flow channels 121o and 500i and the second flow channels 221o and 500q. The hydraulic power supply apparatus 600 fluidly communicates with the air conditioner and shares a heat exchange medium with the air conditioner, which helps simplify a structure and reducing costs.

In an example, the second opening 121q fluidly communicates with the third opening 221p. The air conditioner is connected in series between the first opening 121p and the fourth opening 221q through a pipeline. In other words, the first flow channels 121o and 500i, the second flow channels 221o and 500q, and the air conditioner are sequentially connected in series.

In another example, the air conditioner is connected in series between the first opening 121p and the second opening 121q through a pipeline. In addition, the air conditioner is connected in series between the third opening 221p and the fourth opening 221q through a pipeline. In other words, the first flow channels 121o and 500i and the second flow channels 221o and 500q are connected to the air conditioner in parallel.

Unless otherwise defined, the technical and scientific terms used in this specification have the same meanings as those usually understood by a person skilled in the art in the present disclosure. The terms used in this specification are merely intended to describe specific implementation purposes, and are not intended to limit the present disclosure. Terms such as "providing" existing in this specification may indicate that one component is directly attached to another component, or may indicate that one component is attached to another component by using a middleware. A feature described in one implementation in this specification may be applied to another implementation alone or in combination with another feature, unless the feature is inapplicable or otherwise described in another implementation.

The present disclosure has been described by using the foregoing implementations, but it will be understood that the foregoing implementations are merely used for example and description purposes, and are not intended to limit the present disclosure to the scope of the described implementations. A person skilled in the art will understand that more variations and modifications may be made according to the teachings of the present disclosure, and these variations and modifications fall within the protection scope of the present disclosure.

## Claims

1. A hydraulic power supply apparatus (600), wherein the hydraulic power supply apparatus (600) comprises:
a motor pump (100, 200), the motor pump (100, 200) comprising a hydraulic pump (110, 210) and a motor (120, 220) configured to drive the hydraulic pump (110, 210);
a motor controller (300), the motor controller (300) being disposed on an outer side of the motor (120, 220); and
a radiator (122, 222), the radiator (122, 222) being located between the motor (120, 220) and the motor controller (300).

2. The hydraulic power supply apparatus (600) according to claim 1, wherein
the motor (120, 220) comprises a motor housing (121, 221, 500), the radiator (122, 222) being formed in the motor housing (121, 221, 500), and a flow channel (121o, 221o) being formed inside the radiator (122, 222).

3. The hydraulic power supply apparatus (600) according to claim 2, wherein
the motor housing (121, 221, 500) comprises:
a housing body (121a, 221a), a mounting groove (121b, 221b, 500e, 500m) being provided at a part of the housing body (121a, 221a) that faces the motor controller (300);
a flow channel plate (124, 224, 502), the flow channel plate (124, 224, 502) being connected to the mounting groove (121b, 221b, 500e, 500m) to close an opening of the mounting groove (121b, 221b, 500e, 500m) to form a heat dissipation cavity (121t, 221t), and the flow channel plate (124, 224, 502) supporting the motor controller (300); and
a flow guide rib (121c, 221c, 500f, 500n), the flow guide rib (121c, 221c, 500f, 500n) being connected to the heat dissipation cavity (121t, 221t), to define the heat dissipation cavity (121t, 221t) as the flow channel (121o, 221o).

4. The hydraulic power supply apparatus (600) according to claim 3, wherein
the flow channel plate (124, 224, 502) comprises an auxiliary heat dissipation element (124a, 224a) extending to the flow channel (121o, 221o).

5. The hydraulic power supply apparatus (600) according to claim 4, wherein
the auxiliary heat dissipation element (124a, 224a) is configured as a heat dissipation pin, the flow channel plate (124, 224, 502) comprises a plurality of heat dissipation pins, and the heat dissipation pins are spaced apart along an arrangement path adapted to the flow channel (121o, 221o).

6. The hydraulic power supply apparatus (600) according to claim 1, wherein
the radiator (122, 222) is a heat pipe (123, 223).

7. The hydraulic power supply apparatus (600) according to claim 6, wherein
the motor (120, 220) comprises a motor housing (121, 221, 500), and the heat pipe (123, 223) is disposed in the motor housing (121, 221, 500).

8. The hydraulic power supply apparatus (600) according to any one of claims 1 to 5, wherein
the hydraulic power supply apparatus (600) comprises two motor pumps (100, 200), the two motor pumps (100, 200) are coaxially disposed opposite to each other, and the motors (120, 220) of the two motor pumps (100, 200) are connected in axial directions (D2) of the motors (120, 220).

9. The hydraulic power supply apparatus (600) according to claim 8, wherein
the two motor pumps (100, 200) comprise two motors (120, 220), the two motors (120, 220) are respectively denoted as a first motor (120) and a second motor (220), the hydraulic power supply apparatus (600) comprises two radiators (122, 222), the two radiators (122, 222) are respectively a first radiator (122) and a second radiator (222), the first radiator (122) is located between the motor controller (300) and the first motor (120), and the second radiator (222) is located between the motor controller (300) and the second motor (220).

10. The hydraulic power supply apparatus (600) according to claim 9, wherein
the motor (120, 220) comprises a motor housing (121, 221) and a motor body (125, 225), motor housings (121, 221, 500) of the two motors (120, 220) are connected, the two motor housings (121, 221) are respectively a first motor housing (121) and a second motor housing (221), an accommodating groove (400) is provided between the two motor bodies (125, 225), the accommodating groove (400) is formed in the first motor housing (121) and the second motor housing (221), an opening of the accommodating groove (400) faces the motor controller (300), and the accommodating groove (400) is configured to accommodate at least a capacitor (375) of the motor controller (300).

11. The hydraulic power supply apparatus (600) according to claim 10, wherein
the first radiator (122) is formed in the first motor housing (121), a first flow channel (121o) is formed inside the first radiator (122), the second radiator (222) is formed in the second motor housing (221), and a second flow channel (221o) is formed inside the second radiator (222); and
the first flow channel (121o) and the second flow channel (221o) are respectively located on two sides of the accommodating groove (400), and the first flow channel (121o) and the second flow channel (221o) are in communication.

12. The hydraulic power supply apparatus (600) according to claim 11, wherein a flow-through groove (500c) is provided on a sidewall on the same side of the first motor housing (121) and the second motor housing (221), and the flow-through groove (500c) separately communicates with the first flow channel (121o) and the second flow channel (221o).

13. The hydraulic power supply apparatus (600) according to any one of claims 8 to 11, wherein
the motors (120, 220) of the two motor pumps (100, 200) are respectively denoted as the first motor (120) and the second motor (220), and the hydraulic power supply apparatus (600) further comprises:
a first electrical connection member (160), the first electrical connection member (160) being electrically connected to the first motor (120, 220) and the motor controller (300); and
a second electrical connection member (260), the second electrical connection member (260) being electrically connected to the second motor (120, 220) and the motor controller (300); wherein
an accommodating groove (500a) is formed between the first motor (120) and the second motor (220), and the first electrical connection member (160) and the second electrical connection member (260) are located in the accommodating groove (500a).

14. The hydraulic power supply apparatus (600) according to claim 13, wherein
the motor controller (300) comprises a capacitor (375), the capacitor (375) being disposed in the accommodating groove (500a) and being located between the first electrical connection member (160) and the second electrical connection member (260).

15. The hydraulic power supply apparatus (600) according to any one of claims 1 to 14, wherein
the motor controller (300) comprises an electrical control housing (310) and a breather valve (340), the breather valve (340) being connected to the electrical control housing (310), and the breather valve (340) communicating with the inside and the outside of the electrical control housing (310).

16. A chassis system, wherein the chassis system comprises:
a shock absorber; and
the hydraulic power supply apparatus (600) according to any one of claims 1 to 15, the hydraulic power supply apparatus (600) communicating with the shock absorber.

17. A vehicle, wherein the vehicle comprises the hydraulic power supply apparatus (600) according to any one of claims 1 to 15 or the chassis system according to claim 16.

18. The vehicle according to claim 17, wherein
the hydraulic power supply apparatus (600) comprises a first motor pump (100) and a second motor pump (200), the first motor pump (100) comprising a first flow channel (121o, 500i), and the second motor pump (200) comprising a second flow channel (221o, 500q); and
the vehicle further comprises an air conditioner, the air conditioner communicating with the first flow channel (121o, 500i) and/or the second flow channel (221o, 500q).
